# EUROPEAN PATENT SPECIFICATION

(11) **EP 4 350 550 B1**
(45) Date of publication and mention of the grant of the patent: **08.04.2026**
(21) Application number: 22815760.8
(22) Date of filing: 26.04.2022
(51) Int. Cl.: G06F 21/57, B60R 16/02, G06F 21/52, G06F 9/455, G06F 11/30

(54) **MONITORING SYSTEM, MONITORING METHOD, MONITORING DEVICE, AND FUNCTION RESTRICTING DEVICE**
ÜBERWACHUNGSSYSTEM, ÜBERWACHUNGSVERFAHREN, ÜBERWACHUNGSVORRICHTUNG UND FUNKTIONSEINSCHRÄNKUNGSVORRICHTUNG
SYSTÈME DE SURVEILLANCE, PROCÉDÉ DE SURVEILLANCE, DISPOSITIF DE SURVEILLANCE ET DISPOSITIF DE RESTRICTION DE FONCTION

(30) Priority: 31.05.2021 WO PCT/JP2021/020681
(43) Date of publication of application: 10.04.2024
(73) Proprietor: Panasonic Intellectual Property Corporation of America, Torrance, CA 90504 (US)
(72) Inventor: UJIIE, Yoshihiro, Kadoma-shi, Osaka 571-0057 (JP); HIRANO, Ryo, Kadoma-shi, Osaka 571-0057 (JP); KISHIKAWA, Takeshi, Kadoma-shi, Osaka 571-0057 (JP)
(74) Representative: Grünecker Patent- und Rechtsanwälte PartG mbB
(86) International application number: PCT/JP2022/018819
(87) International publication number: WO 2022/255005

(56) References cited:
- WO-A1-2015/194323
- JP-A- 2018 133 743
- JP-A- 2020 530 624
- US-A1- 2009 199 264
- US-A1- 2019 034 191
- US-A1- 2020 216 097

## Description

### [Technical Field]

The present disclosure relates to monitoring systems, monitoring methods, monitoring devices, and function restricting devices.

### [Background Art]

In recent years, vehicle systems become complicated in order to provide users with advanced functions such as autonomous driving. In order to solve the problem of increase in development period and cost caused by the complication, there is movement to integrate functions which have been conventionally mounted separately on a plurality of electronic control units (ECUs) into a single ECU. In such integration of ECUs, virtual technology is used to cause a single ECU to operate a plurality of virtual computers. Such virtual computers are referred to as virtual machines. Software that is a virtualization infrastructure for operating the plurality of virtual machines is referred to as hypervisor. When vulnerability in virtual software or a device driver in a hypervisor or a defect in specifications becomes noticeable, there is a problem that one or more memory regions that are assigned to the hypervisor or virtual machines may be manipulated.

As a countermeasure against such a problem, Japanese Patent No. 4288292 discloses a device that periodically monitors manipulation in an operating system.

US 2020/216097 A1 relates to a method for detecting cyber threats in a vehicle may detecting an event related to exploitation of a component connected to an in-vehicle network based on a deviation of execution of executable code from a reference execution behavior. A deviation may be detected based on a set of whitelists and blacklists.

US 2019/034191 A1 relates to operations for receiving and integrating a delta file in a vehicle. Operations may include receiving, at an Electronic Control Unit (ECU) in the vehicle, a delta file, the delta file comprising a plurality of deltas corresponding to a software update for software on the ECU and startup code for executing the delta file in the ECU.

### [Summary of Invention]

### [Technical Problem]

Security in vehicles is desired to be increased.

In view of this, the present disclosure provides monitoring systems, monitoring methods, monitoring devices, and function restricting devices with increased security in vehicles.

### [Solution to Problem]

A monitoring system according to an aspect of the present disclosure as defined in claim 1.

A monitoring method according to an aspect of the present disclosure as defined in claim 16.

A monitoring device according to an aspect of the present disclosure as defined in claim 17.

### [Advantageous Effects of Invention]

The monitoring system, etc., according to aspects of the present disclosure increase security in vehicles.

### [Brief Description of Drawings]

[FIG. 1]

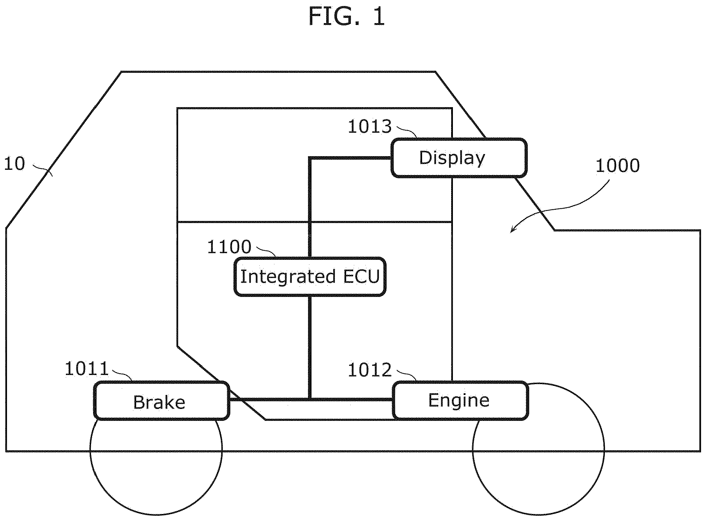

   FIG. 1 is a diagram illustrating one example of an overall configuration of a vehicle network system according to Embodiment 1.
[FIG. 2]

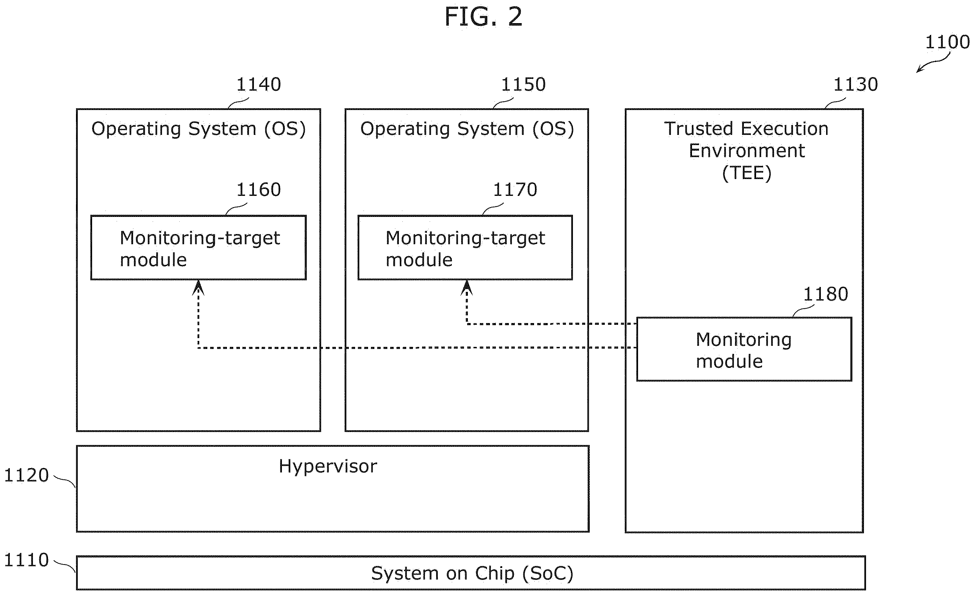

   FIG. 2 is a diagram illustrating one example of a configuration of an integrated ECU according to Embodiment 1.
[FIG. 3]

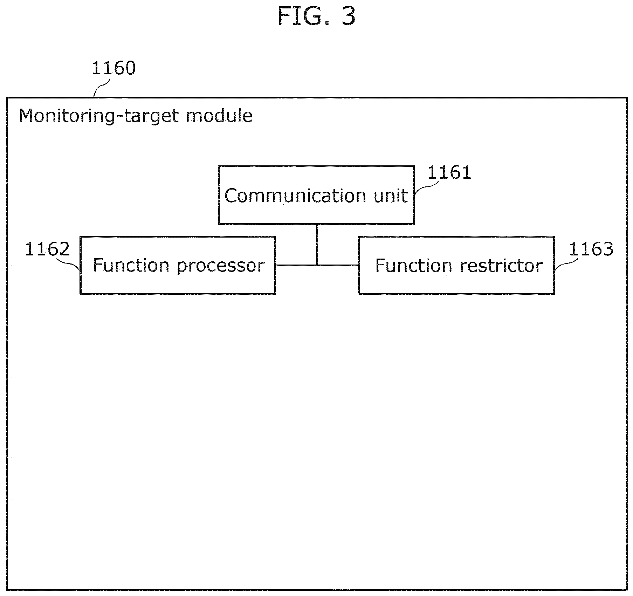

   FIG. 3 is a diagram illustrating one example of a configuration of a monitoring-target module according to Embodiment 1.
[FIG. 4]

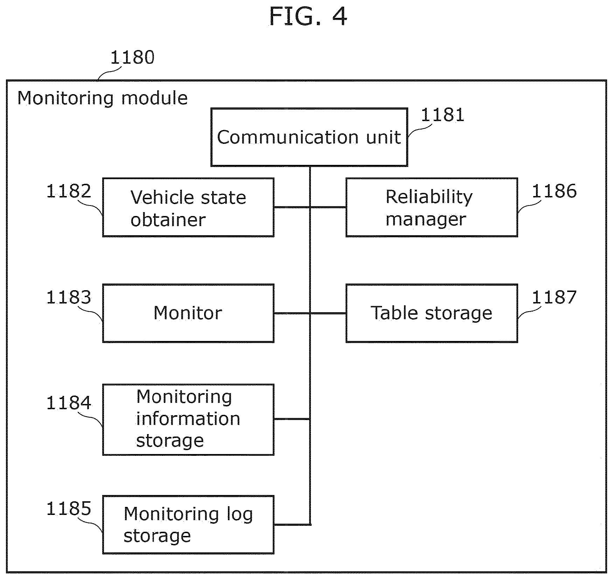

   FIG. 4 is a diagram illustrating one example of a configuration of a monitoring module according to Embodiment 1.
[FIG. 5]

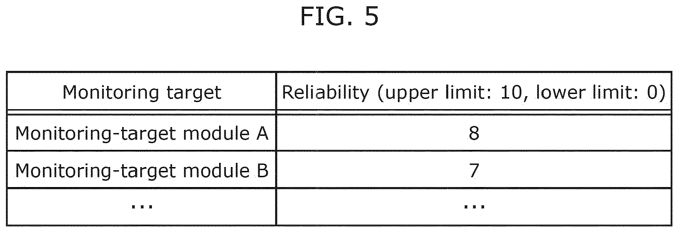

   FIG. 5 is a diagram indicating one example of a reliability management table according to Embodiment 1.
[FIG. 6]

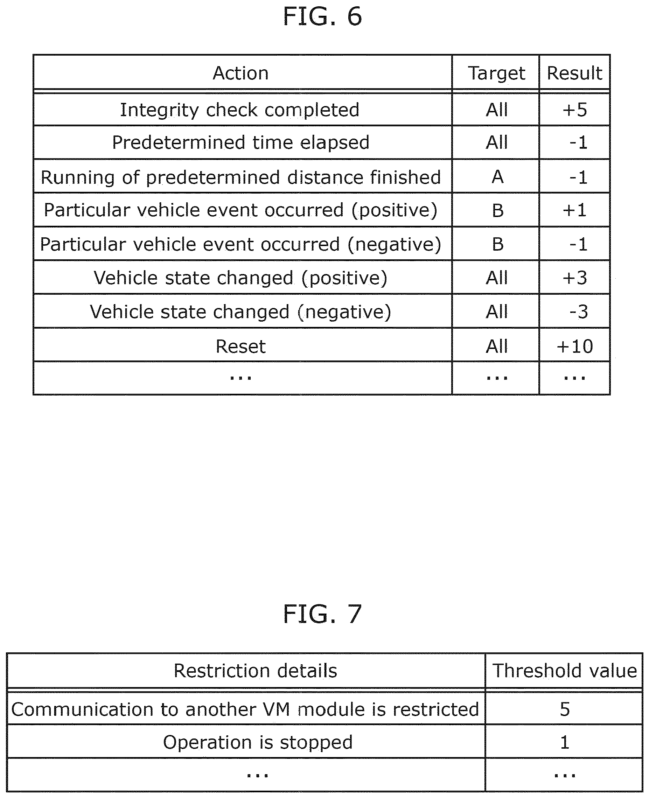

   FIG. 6 is a diagram indicating one example of a reliability adjustment table according to Embodiment 1.
[FIG. 7]
   FIG. 7 is a diagram indicating one example of a function restriction table according to Embodiment 1.
[FIG. 8]

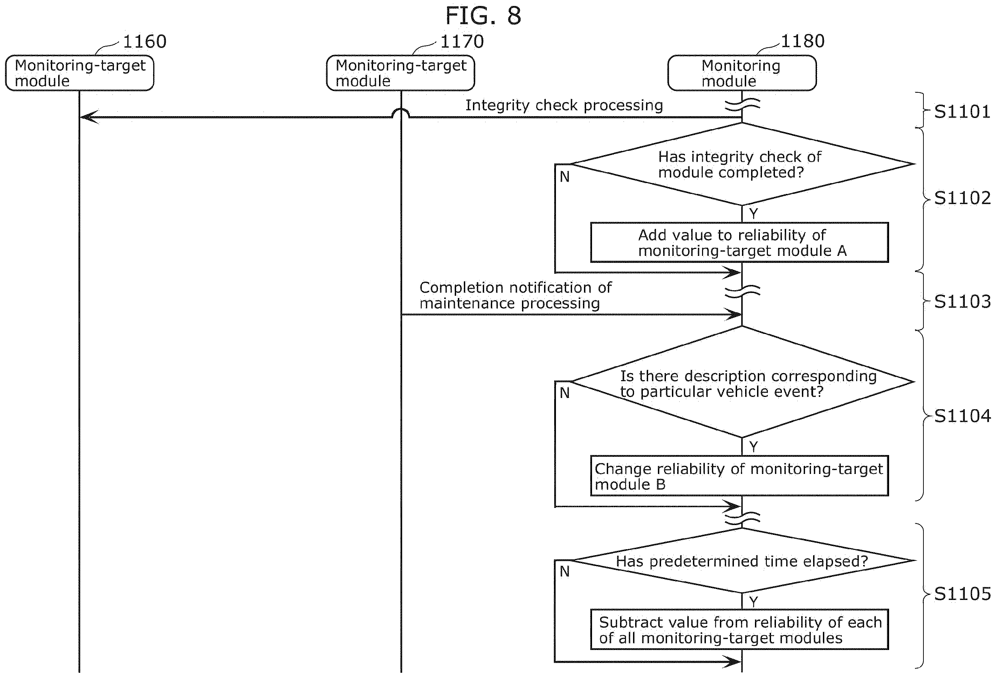

   FIG. 8 is a diagram indicating one example of a reliability update sequence according to Embodiment 1.
[FIG. 9]

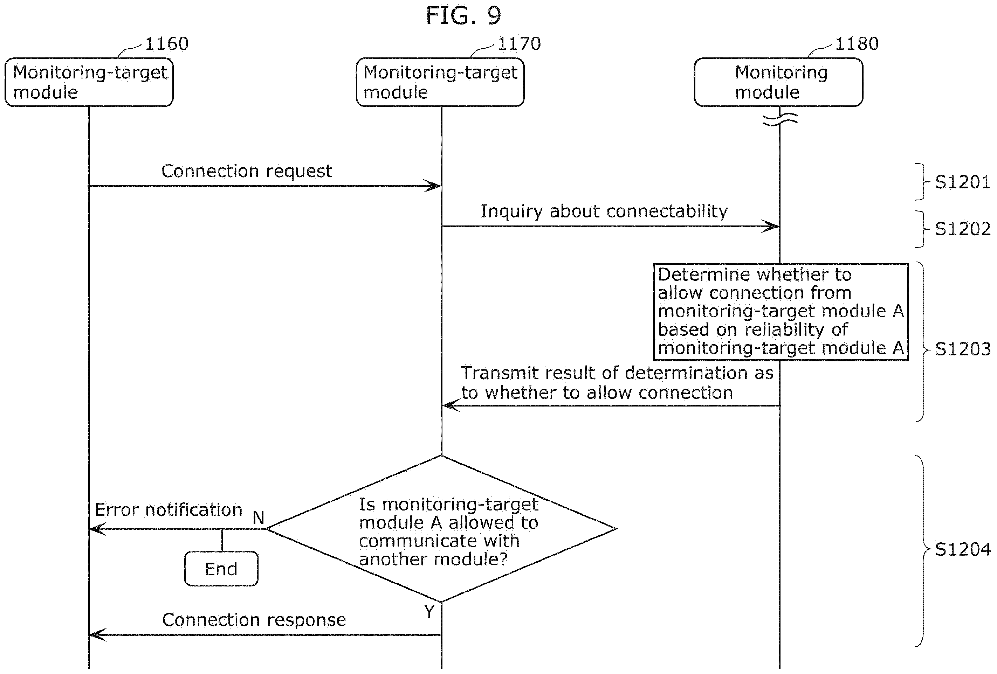

   FIG. 9 is a diagram indicating one example of a determination sequence using reliability according to Embodiment 1.
[FIG. 10]

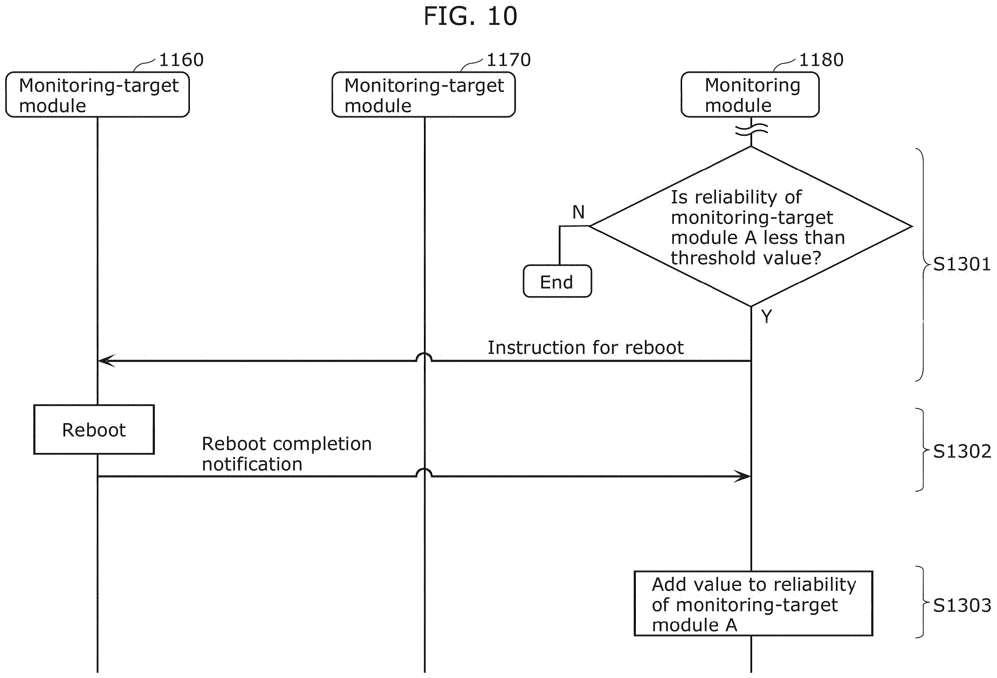

   FIG. 10 is a diagram indicating one example of a sequence for making reliability closer to an initial value according to Embodiment 1.
[FIG. 11]

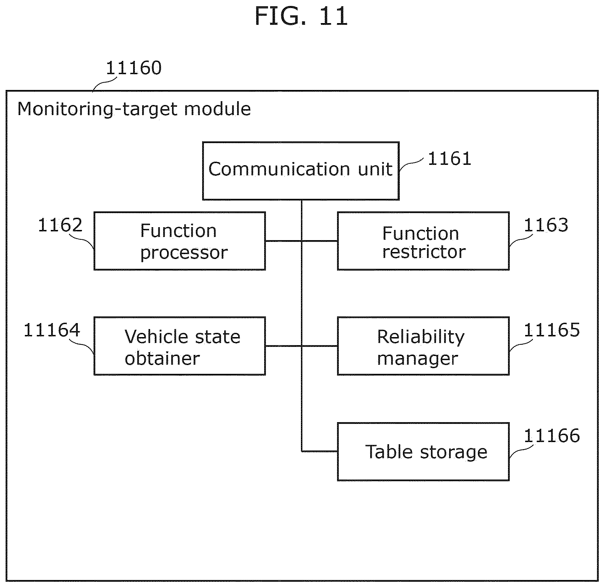

   FIG. 11 is a diagram indicating one example of a configuration of a monitoring-target module according to a variation of Embodiment 1.
[FIG. 12]

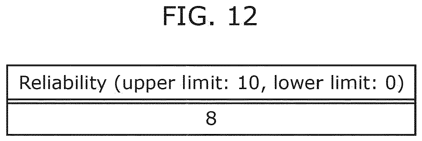

   FIG. 12 is a diagram indicating one example of a reliability management table according to the variation of Embodiment 1.
[FIG. 13]

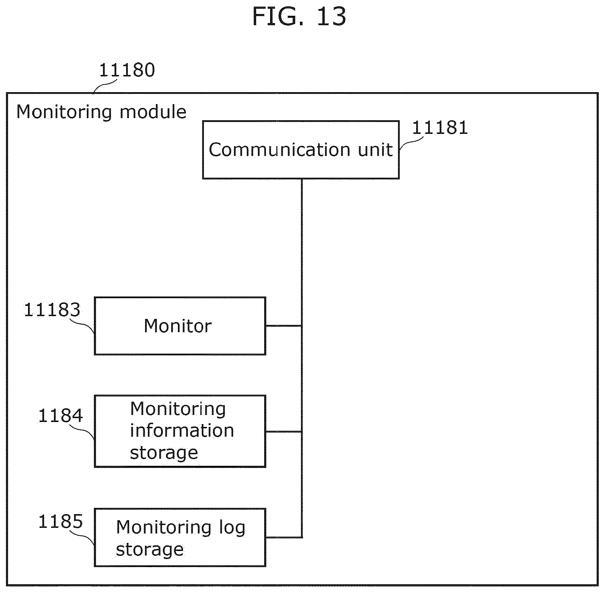

   FIG. 13 is a diagram illustrating one example of a configuration of a monitoring module according to the variation of Embodiment 1.
[FIG. 14]

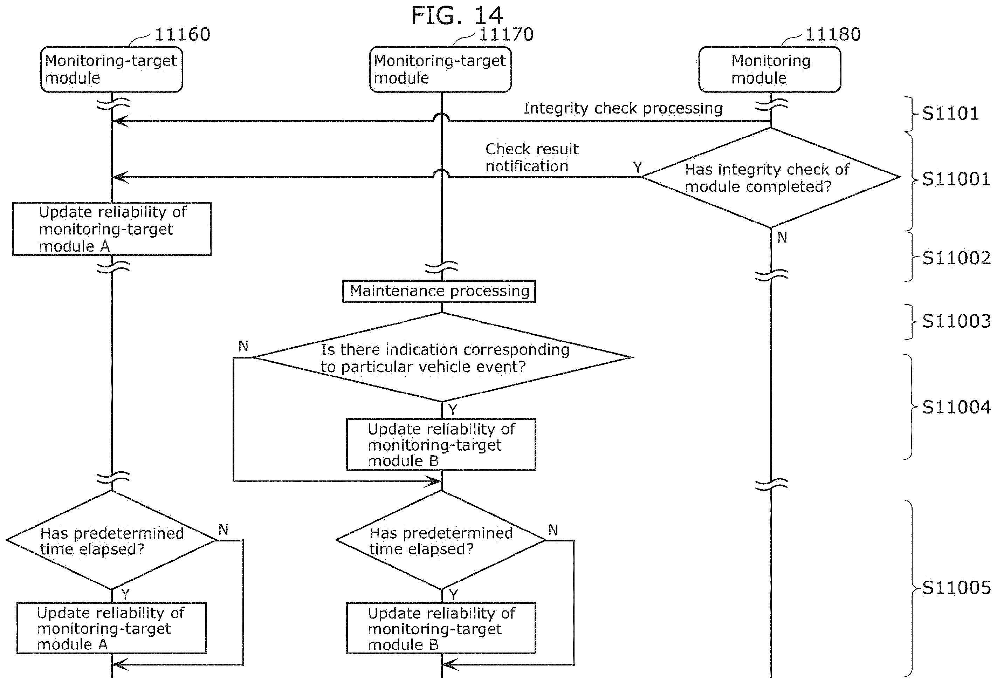

   FIG. 14 is a diagram indicating one example of a reliability update sequence according to the variation of Embodiment 1.
[FIG. 15]

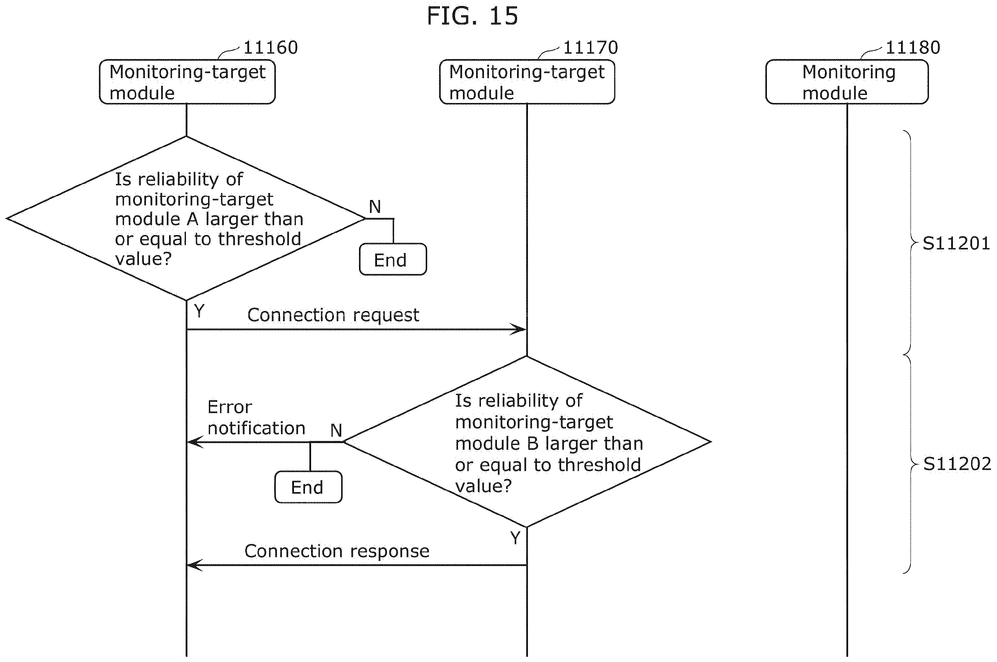

   FIG. 15 is a diagram indicating one example of a determination sequence using reliability according to the variation of Embodiment 1.
[FIG. 16]

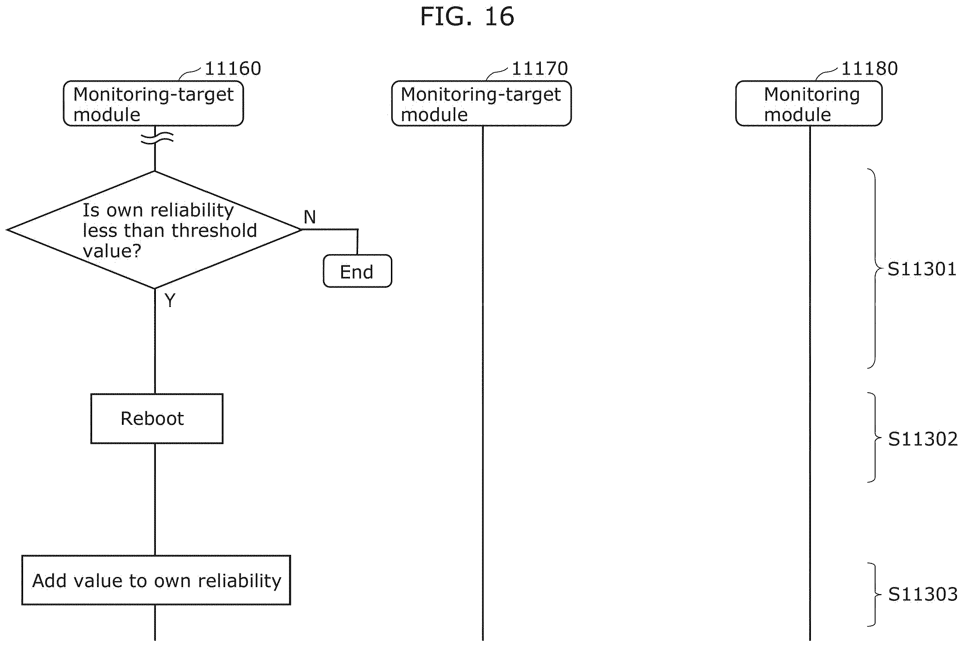

   FIG. 16 is a diagram indicating one example of a sequence for making reliability closer to an initial value according to the variation of Embodiment 1.
[FIG. 17]

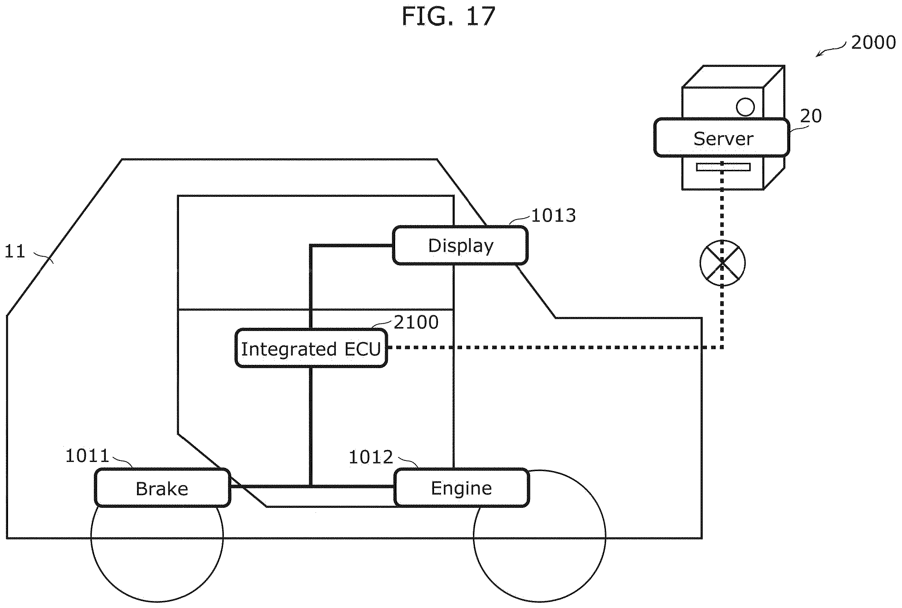

   FIG. 17 is a diagram illustrating one example of an overall configuration of a network system according to Embodiment 2.
[FIG. 18]

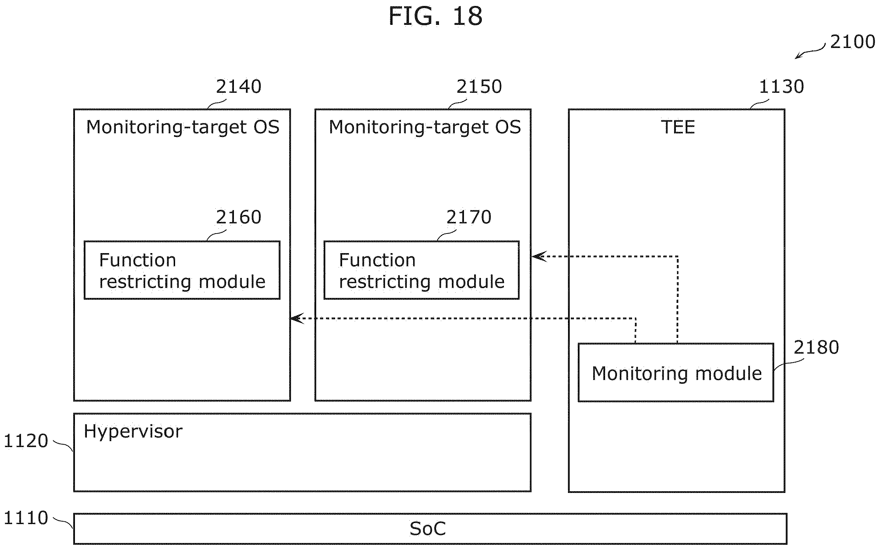

   FIG. 18 is a diagram illustrating one example of a configuration of an integrated ECU according to Embodiment 2.
[FIG. 19]

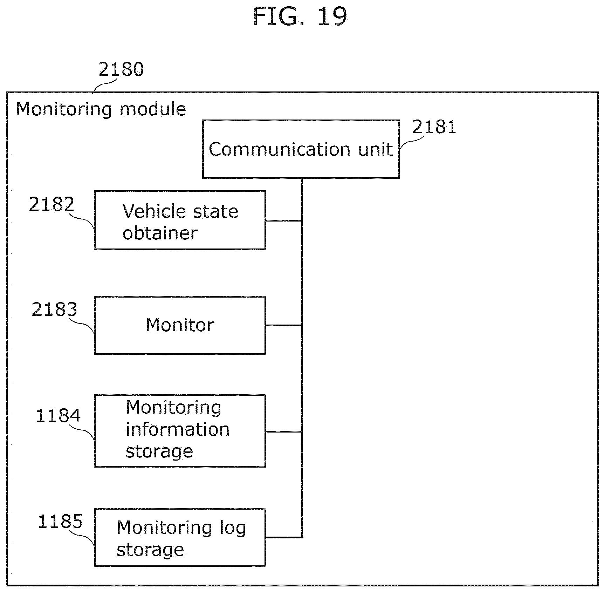

   FIG. 19 is a diagram illustrating one example of a configuration of a monitoring module according to Embodiment 2.
[FIG. 20]

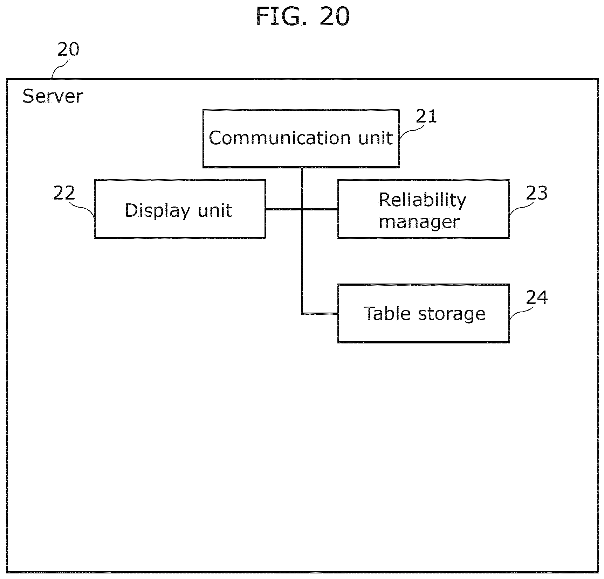

   FIG. 20 is a diagram illustrating one example of a configuration of a server according to Embodiment 2.
[FIG. 21]

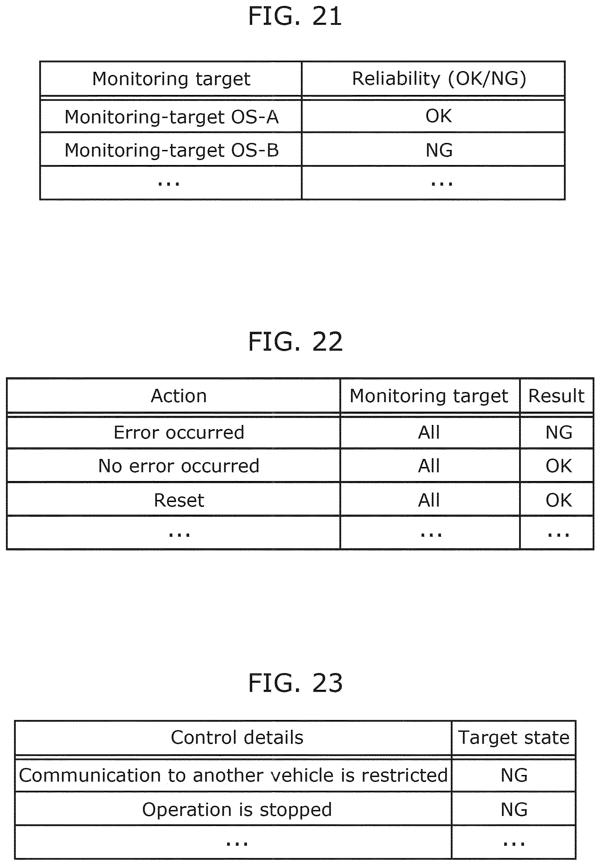

   FIG. 21 is a diagram indicating one example of a reliability management table according to Embodiment 2.
[FIG. 22]
   FIG. 22 is a diagram indicating one example of a reliability adjustment table according to Embodiment 2.
[FIG. 23]
   FIG. 23 is a diagram illustrating one example of a function restriction table according to Embodiment 2.
[FIG. 24]

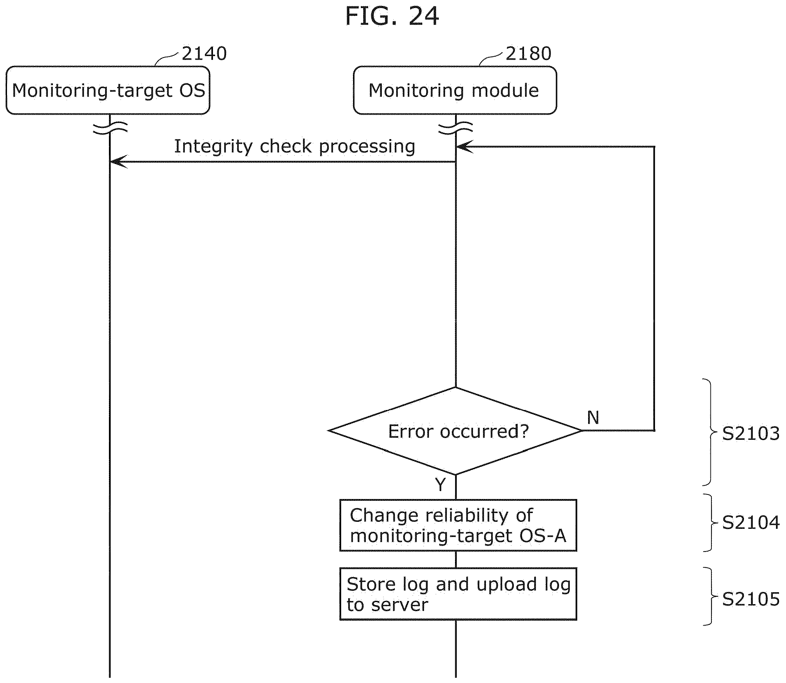

   FIG. 24 is a diagram indicating one example of a reliability update sequence according to Embodiment 2.
[FIG. 25]

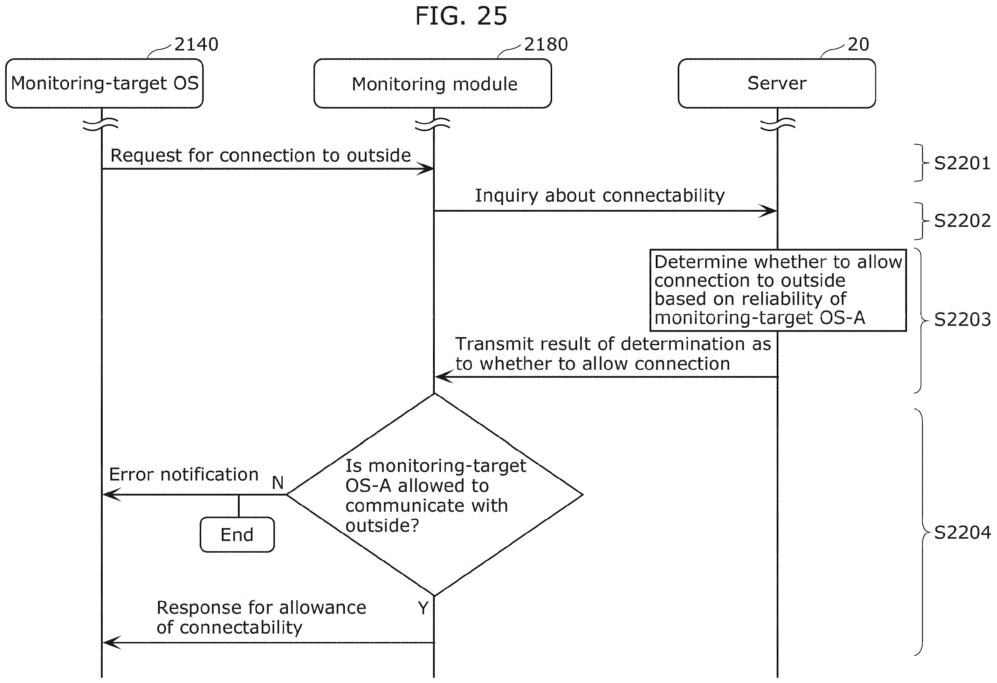

   FIG. 25 is a diagram indicating one example of a determination sequence using reliability according to Embodiment 2.
[FIG. 26]

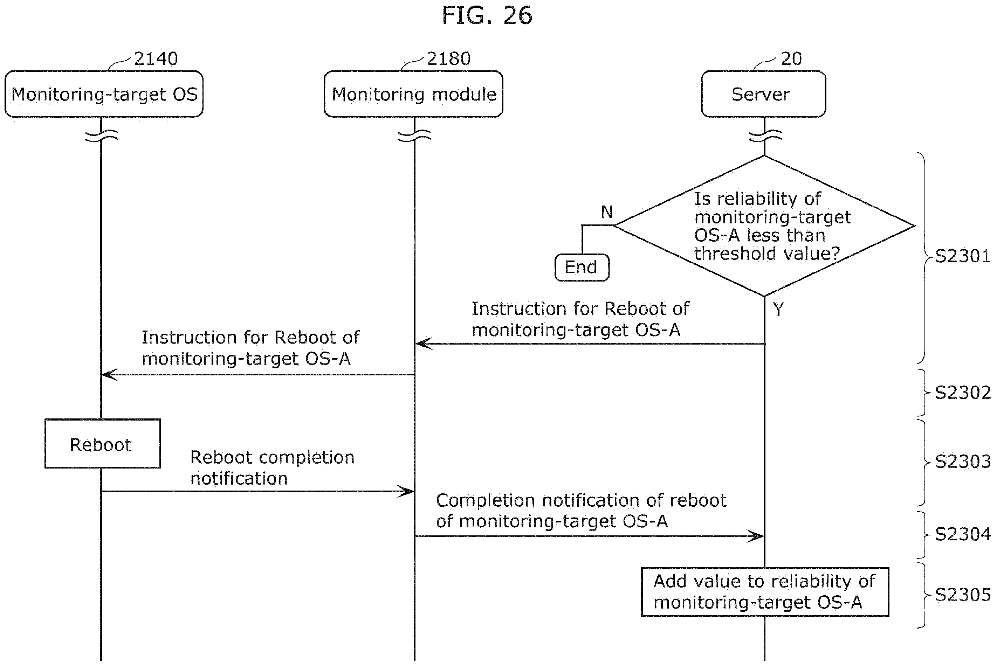

   FIG. 26 is a diagram indicating one example of a sequence for making reliability closer to an initial value according to Embodiment 2.
[FIG. 27]

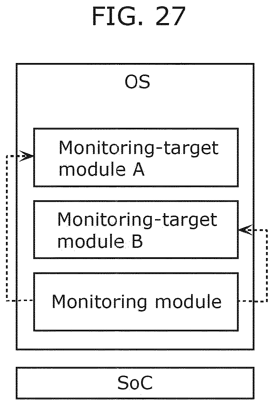

   FIG. 27 is a diagram illustrating one example of a configuration of an integrated ECU according to another embodiment.
[FIG. 28]

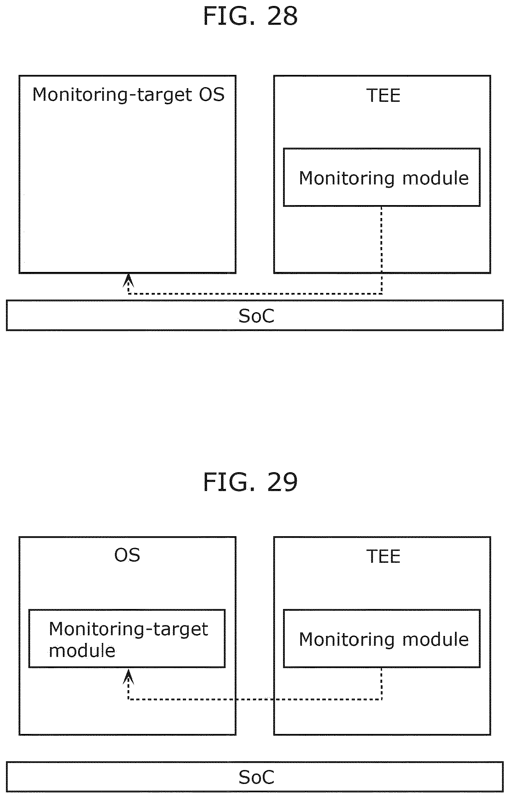

   FIG. 28 is a diagram illustrating one example of a configuration of an integrated ECU according to another embodiment.
[FIG. 29]
   FIG. 29 is a diagram illustrating one example of a configuration of an integrated ECU according to another embodiment.
[FIG. 30]

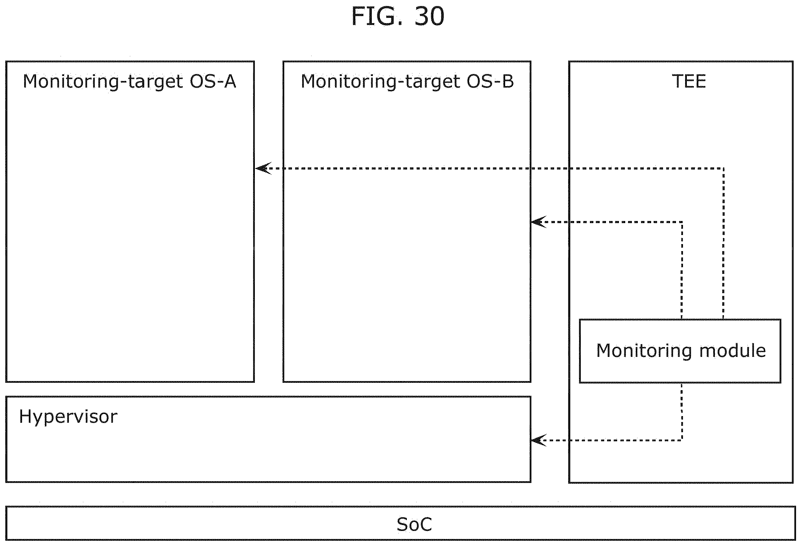

   FIG. 30 is a diagram illustrating one example of a configuration of an integrated ECU according to another embodiment.
[FIG. 31]

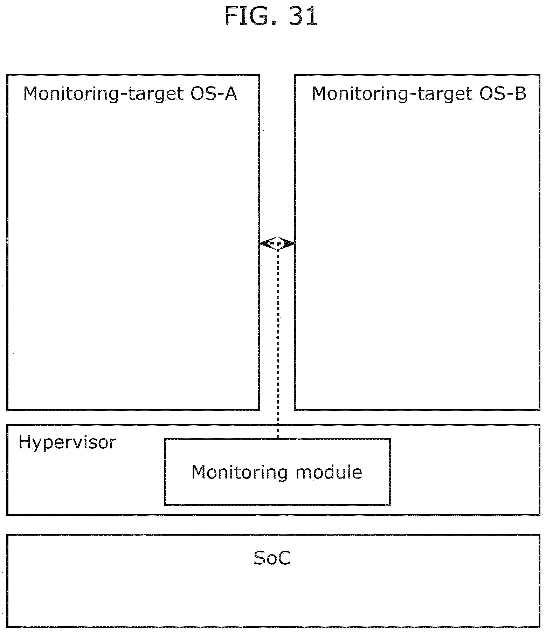

   FIG. 31 is a diagram illustrating one example of a configuration of an integrated ECU according to another embodiment.
[FIG. 32]

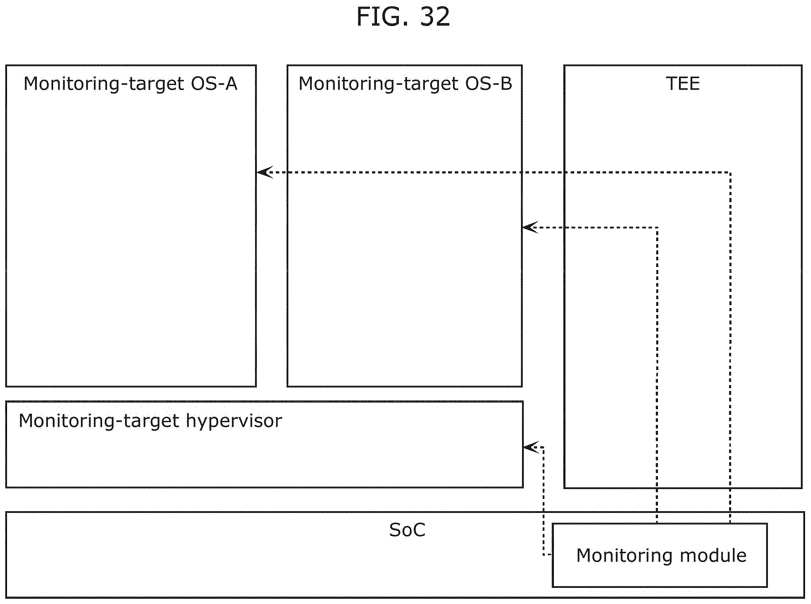

   FIG. 32 is a diagram illustrating one example of a configuration of an integrated ECU according to another embodiment.
[FIG. 33]

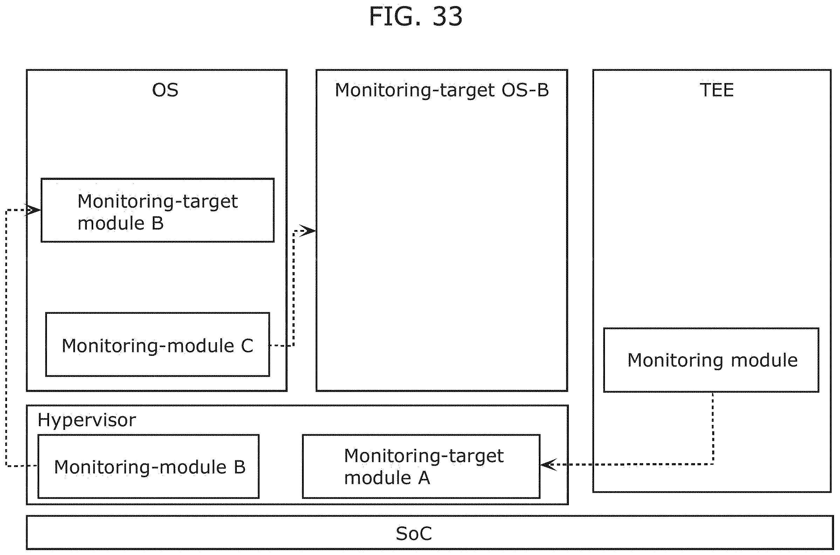

   FIG. 33 is a diagram illustrating one example of a configuration of an integrated ECU according to another embodiment.
[FIG. 34]

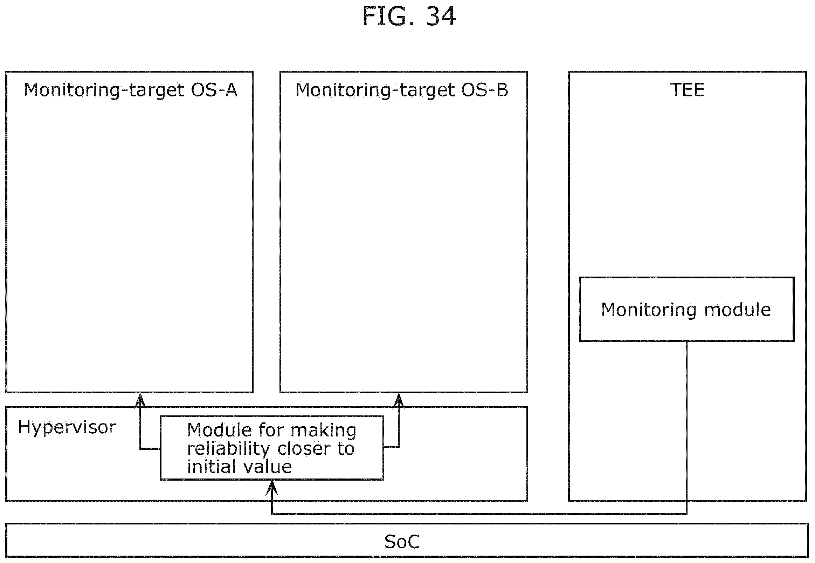

   FIG. 34 is a diagram illustrating one example of a configuration of an integrated ECU according to another embodiment.
[FIG. 35]

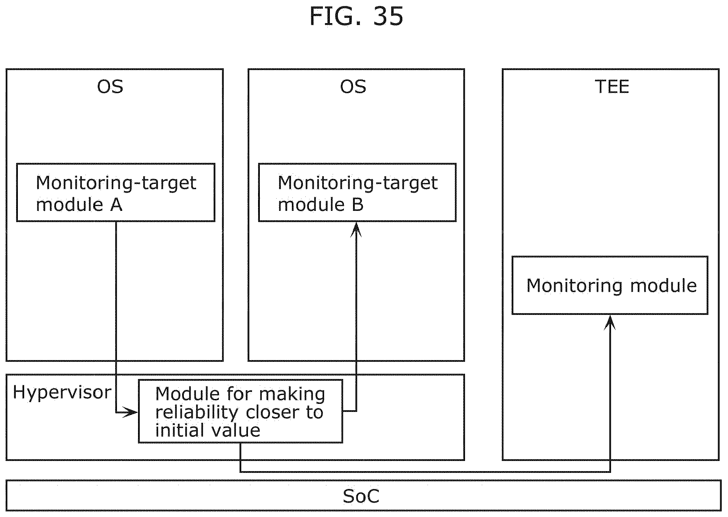

   FIG. 35 is a diagram illustrating one example of a configuration of an integrated ECU according to another embodiment.
[FIG. 36]

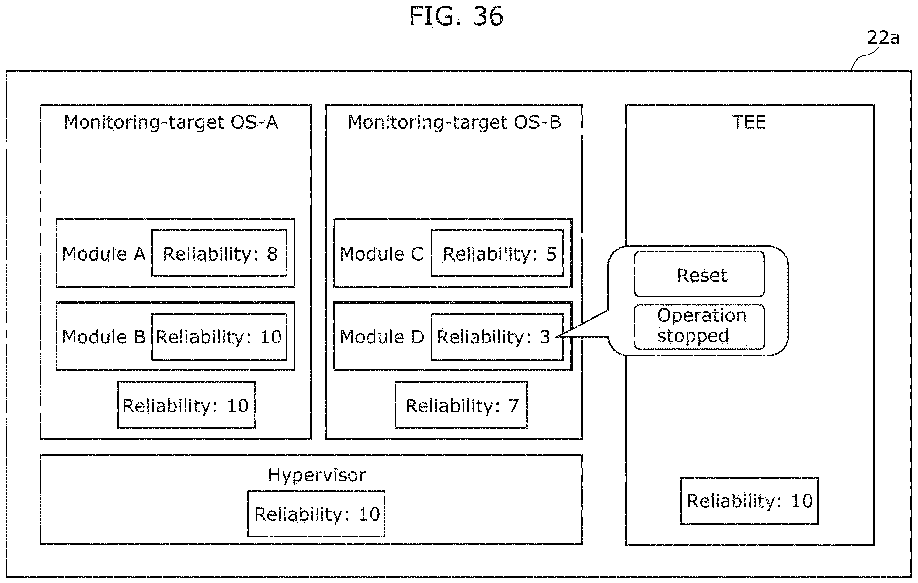

   FIG. 36 is a diagram illustrating one example of a display screen according to another embodiment.

### [Description of Embodiments]

### (Circumstances Leading to the Present Disclosure)

Circumstances leading to the present disclosure are described before the present disclosure is described.

When the device of PTL 1 described above is applied to a single ECU configured to operate a plurality of virtual computers, check-target regions become huge. Thus, the time required for completion of the check of each of the check targets increases, which inevitably makes large differences in the points of end time of check between the check targets. In addition, since check is performed periodically, it is difficult to detect an attack when the attack is made in the time between check and check. For this reason, it is desired that security of a vehicle in which ECUs are mounted be increased.

In view of this, the inventors of the present application have keenly studied monitoring systems, etc., capable of increasing security of vehicles, and have arrived at monitoring systems, etc., that are described below. The inventors of the present application have arrived at monitoring systems, etc., capable of implementing more safety ECUs by setting numerical values based on which each of check targets is determined to be normal and restricting a part of functions of the check target according to the numerical value in an example case where large differences in the points of end time of check are made between the check targets. This allows to appropriately determine and restrict the usable functions of the monitoring target according to the state of the monitoring target, and to maintain a safe state as the entirety of the system.

A monitoring system according to an aspect of the present disclosure is a monitoring system for monitoring a vehicle or a first monitoring target that operates inside the vehicle, the monitoring system including: a reliability manager that manages first reliability indicating a security protection state of the first monitoring target, according to a vehicle event of the vehicle; and a function restrictor that places a restriction on at least a part of functions of the first monitoring target, according to the first reliability.

This allows to appropriately determine and restrict the usable functions of the monitoring target according to the state of the monitoring target, and to maintain a safe state as the entirety of the system. In short, it is possible to increase security in the vehicle.

In addition, for example, the first reliability may be a variable capable of taking at least two levels each of which indicates a degree of the security protection state of the first monitoring target, and the reliability manager may change a current level among the at least two levels each time a vehicle event occurs.

This allows to manage the state of the monitoring target in more detail.

In addition, for example, the vehicle event that causes change of the current level among the at least two levels may include integrity check of software that is the first monitoring target.

This allows to detect manipulation of software that is the monitoring target, and reduce influence onto another monitoring target, etc.

In addition, for example, the reliability manager may change the current level among the at least two levels by performing at least one of: adding a value to the first reliability when the integrity check has been successfully completed; or subtracting a value from the first reliability when the integrity check has not been successfully completed.

This allows to update the reliability according to the result of the integrity check.

In addition, for example, the vehicle event that causes change of the current level among the at least two levels may include an elapse of a predetermined time.

This allows to appropriately manage the state of the monitoring target for which risks such as manipulation increase over time, and reduce influence onto another monitoring target, etc., by restricting the part of the functions of the monitoring target according to the state of the monitoring target.

In addition, for example, the reliability manager may subtract a value from the first reliability when the predetermined time has elapsed.

This enables to update the reliability when the predetermined time elapsed.

In addition, for example, the vehicle event that causes change of the current level among the at least two levels may include reboot of the first monitoring target.

This allows to appropriately manage the state of reboot that may or may not be successfully performed depending on manipulation, etc., and reduce influence onto another monitoring target, etc., by restricting the part of the functions of the monitoring target according to the state of the reboot.

In addition, for example, the reliability manager may change the current level among the at least two levels by either adding a value to the first reliability or setting the first reliability to an initial value when the reboot has been successfully completed.

This allows to update the reliability according to the success or failure of the reboot.

In addition, for example, the reliability manager may determine whether the first reliability of the first monitoring target is less than a threshold value, and cause the first monitoring target to execute the reboot when the first reliability is less than the threshold value.

This allows to automatically perform reboot when the reliability decreased, and update the reliability.

In addition, for example, the restriction on the at least the part of the functions of the first monitoring target according to the first reliability of the first monitoring target may include stop of an access right that allows the first monitoring target to access a particular resource.

This allows to appropriately manage access to the resource according to the state of the monitoring target.

In addition, for example, the restriction on the at least the part of the functions according to the first reliability of the first monitoring target may include stop of a communication function of the first monitoring target.

This allows to restrict an action by the monitoring target whose reliability is low, specifically the action of trying to expanding influence onto another monitoring target, etc.

In addition, for example, in a case where the first monitoring target tries to communicate with a communication target, the function restrictor may forbid the first monitoring target from communicating with the communication target when the first reliability is less than the threshold value.

This allows to restrict an action by the monitoring target whose reliability is low, specifically the action of starting communication and expanding influence onto another monitoring target, etc.

In addition, for example, the monitoring system may further monitor the vehicle or a second monitoring target that operates inside the vehicle, the reliability manager may further manage second reliability indicating a security protection state of the second monitoring target, according to a vehicle event of the vehicle, and in a case where the first monitoring target and the second monitoring target try to communicate with each other, the function restrictor may forbid the first monitoring target and the second monitoring target from communicating with each other when at least one of the first reliability or the second reliability is less than the threshold value.

This allows to restrict an action by the monitoring target whose reliability is low, specifically the action of starting communication and expanding influence onto another monitoring target, etc.

In addition, for example, the restriction on the at least the part of the functions according to the first reliability of the first monitoring target may include stop of an operation of the first monitoring target.

This allows to prevent the monitoring target whose reliability is low from keeping operating and placing bad influence onto the entirety of the system.

In addition, for example, a unit of the first monitoring target for which the first reliability is calculated may include at least one of a software process, an operating system, a hyperviser, a virtual machine that operates on the hyperviser, an electronic control unit that operates in the vehicle, or the vehicle.

This allows to restrict functions for each unit, and perform wide monitoring that covers the entirety of the system.

In addition, for example, the monitoring system may further include: a display unit that displays the first monitoring target and the first reliability together.

This allows to check the current state of the monitoring target from outside, which allows to maintain a safe state as the entirety of the system.

In addition, for example, the reliability manager and the function restrictor may be mounted in the vehicle.

This allows to increase security in the vehicle without communicating with something outside the vehicle.

In addition, for example, the monitoring system may include a server that is communicatively connected to the vehicle, and at least one of the reliability manager or the function restrictor may be implemented in the server.

This allows to accurately make a determination as to at least one of reliability or function restriction even when the software, etc., that is the monitoring target has been manipulated.

A monitoring method according to an aspect of the present disclosure is a monitoring method for monitoring a vehicle or a monitoring target that operates inside the vehicle, the monitoring method including: managing reliability indicating a security protection state of the monitoring target, according to a vehicle event of the monitoring target; and placing a restriction on at least a part of functions of the monitoring target, according to the reliability.

With this, advantageous effects similar to those provided by the monitoring system described above can be provided. Specifically, this allows to appropriately determine the usable functions of the monitoring target according to the state of the monitoring target, and to maintain a safe state as the entirety of the system.

A monitoring device according to an aspect of the present disclosure is a monitoring device for monitoring a vehicle or a monitoring target that operates inside the vehicle, the monitoring device being included in a monitoring system that includes the monitoring device and a function restricting device for placing a restriction on at least a part of functions of the monitoring target, the monitoring device further including: a reliability manager that manages reliability indicating a security protection state of the monitoring target, according to a vehicle event of the vehicle.

This allows to manage the state of the monitoring target appropriately.

A function restricting device according to an aspect of the present disclosure is a function restricting device for placing a restriction on at least a part of functions of a monitoring target, the function restricting device being included in a monitoring system that includes a monitoring device for monitoring a vehicle or the monitoring target that operates inside the vehicle and the function restricting device, the function restricting device further including: a function restrictor that places a restriction on at least a part of functions of the monitoring target, according to reliability indicating a security protection state of the monitoring target, according to a vehicle event of the vehicle.

This allows to appropriately determine the usable functions of the monitoring target according to the state of the monitoring target.

Hereinafter, a fraud countermeasure method relating to the embodiments of the present disclosure is described with reference to the drawings. The embodiments described below each indicate a preferred specific example of the present disclosure. In other words, the numerical values, shapes, materials, elements, the arrangement and connection of the elements, steps, the order of the steps, etc., in the following embodiments are mere examples of the present disclosure, and therefore are not intended to limit the present disclosure. The present disclosure is identified based on the recitation of the claims. Accordingly, among the elements in the embodiments below, the elements that are not recited in any of the independent claims that define the most generic concept of the present disclosure are not always required to solve the problem of the present disclosure, but are explained as elements included in one or more preferred embodiments.

In addition, it is to be noted that the respective diagrams are schematic diagrams, and are not necessarily precisely illustrated. Accordingly, for example, the scales in the respective diagrams do not always match. In addition, in each of the diagrams, elements that are substantially the same as those in one or more of the diagrams are assigned with the same reference signs, and overlapping descriptions are omitted or simplified.

In addition, in the present specification, terms indicating relationships between elements such as "match", terms indicating numerical values and numerical ranges refer not only to their strict meanings, but each encompass a range of substantial equivalents, such as a range of deviations of a few percent (for example, approximately 10%).

### [Embodiment 1]

### [1. Configuration of System]

Here, a vehicle network system according to an embodiment of the present disclosure is described with reference to the drawings.

### [1.1 Overall Configuration of Vehicle Network System 1000]

FIG. 1 is a diagram illustrating one example of an overall configuration of vehicle network system 1000 according to an embodiment.

As illustrated in FIG. 1, vehicle network system 1000 is a network system present inside vehicle 10, and includes brake 1011, engine 1012, display 1013, and integrated ECU 1100 which connects with all the elements listed earlier. It is to be noted that integrated ECU 1100 may be connected to one or more elements other than brake 1011, engine 1012, and display 1013. In addition, vehicle network system 1000 is one example of a monitoring system.

A processing instruction according to a driver operation is transmitted from integrated ECU 1100 to each of brake 1011 and engine 1012, and the results are fed back.

A processing instruction according to a driver operation is transmitted from integrated ECU 1100 to display 1013, and content is displayed thereon. In addition, upon reception of the driver operation onto display 1013, the content is fed back to integrated ECU 1100.

It is to be noted that display 1013 may, for example, display a monitoring target to be described later and the reliability of the monitoring target together. In addition, display 1013 may display determination results such as the results of integrity check and maintenance processing to be described later.

### [1.2 Configuration Diagram of Integrated ECU 1100]

FIG. 2 is a diagram illustrating one example of a configuration of integrated ECU 1100 according to the present embodiment.

As illustrated in FIG. 2, it is assumed that integrated ECU 1100 is in an environment where hypervisor 1120 and a trusted execution environment (hereinafter, TEE) 1130 operate on a system on chip (hereinafter, SoC) which is hardware, and virtual machines (hereinafter, VMs) (not illustrated) are booted on hypervisor 1120, and different operating systems (hereinafter, OSs) operate on the VMs.

In the present embodiment, monitoring-target module 1160 and monitoring-target module 1170 which are monitoring targets that operate on OS 1140 and OS 1150, respectively. In addition, monitoring module 1180 which monitors monitoring-target module 1160 and monitoring-target module 1170 operates on TEE 1130. TEE 1130 operates independently of OSs 1140 and 1150. Although an example where the monitoring targets of monitoring module 1180 are monitoring-target modules 1160 and 1170 is described in the present embodiment, the number of monitoring targets is not particularly limited, and may be any as long as the number is one or more.

### [1.3 Configuration Diagram of Monitoring-target Module 1160]

FIG. 3 is a diagram illustrating one example of monitoring-target module 1160 according to the present embodiment.

As illustrated in FIG. 3, monitoring-target module 1160 includes communication unit 1161, function processor 1162, and function restrictor 1163. It is to be noted that monitoring-target module 1170 has a configuration similar to that of monitoring-target module 1160, and thus a description thereof is omitted. In addition, monitoring-target modules 1160 and 1170 are also simply referred to as modules.

Communication unit 1161 takes a role for communicating with hypervisor 1120, the module, the process, etc., that operate in the OS which operates in another VM. Communication unit 1161 asks monitoring module 1180 about the reliability determination result, and receives the reliability determination result. Communication unit 1161 is configured to include a communication module (communication circuit).

It is to be noted that the reliability is an indicator indicating whether a monitoring target (here, monitoring-target module 1160) is safe in terms of security. For example, the reliability is the degree of the security protection state of the monitoring target. The reliability indicates, for example, a likelihood that no manipulation has been made onto the monitoring target ((here, monitoring-target module 1160), or the monitoring target has not been suffered from hacking.

Function processor 1162 is a processor for implementing original functions of monitoring-target module 1160. Examples of processing for implementing the original functions include rendering processing for display 1013 and instructions for running control for brake 1011 or engine 1012.

Function restrictor 1163 restricts at least a part of functions for each monitoring target according to the reliability of the monitoring target. For example, function restrictor 1163 receives the reliability determination result from monitoring module 1180, and restricts the at least part of the functions of function processor 1162 according to the reliability of monitoring module 1180.

It is to be noted that, hereinafter, monitoring-target module 1160 is also referred to as monitoring-target module A, and monitoring-target module 1170 is also referred to as monitoring-target module B. In addition, monitoring-target modules 1160 and 1170 are mounted in vehicle 10.

### [1.4 Configuration Diagram of Monitoring Module 1180]

FIG. 4 is a diagram illustrating one example of monitoring module 1180 according to the present embodiment.

As illustrated in FIG. 4, monitoring module 1180 includes communication unit 1181, vehicle state obtainer 1182, monitor 1183, monitoring information storage 1184, monitoring log storage 1185, reliability manager 1186, and table storage 1187. In the present embodiment, monitoring module 1180 is one example of a monitoring device for vehicle 10 or monitoring targets which operate in vehicle 10.

Although an example in which the monitoring targets of monitoring module 1180 are monitoring-target modules is described in the present embodiment, it is to be noted that the unit of monitoring targets may be any one of a software process, an operating system, a hypervisor, virtual machines which operate on a hypervisor, electronic control units (ECUs) which operate in vehicle 10, or vehicle 10.

Communication unit 1181 takes a role for communicating with hypervisor 1120, the OS which operates on another VM, the module which operates in the OS, a process, or the like. Communication unit 1181 mainly receives an inquiry from another module, and returns the determination result. Communication unit 1181 is configured to include a communication module (communication circuit).

Vehicle state obtainer 1182 obtains, as vehicle state information, the running state of vehicle 10, a particular event which occurs inside vehicle 10, etc. Vehicle state obtainer 1182 notifies reliability manager 1186 of the vehicle state information received.

Monitor 1183 checks the integrity of a module, a VM file, or a memory region which is a monitoring target, using a hash value required for integrity check stored in monitoring information storage 1184. Monitor 1183 stores the check result into monitoring log storage 1185, and notifies reliability manager 1186 of the check result.

Reliability manager 1186 manages, the reliability of each of monitoring-target modules (monitoring targets) according to a vehicle event, using the vehicle state information received from vehicle state obtainer 1182, the check result received from monitor 1183, and a reliability table (to be described later with reference to FIG. 5). Reliability manager 1186 stores the reliability management table on which the value of the reliability of each monitoring-target module is indicated onto table storage 1187. FIG. 5 is a diagram illustrating one example of a reliability management table according to the present embodiment.

As indicated in FIG. 5, reliability management table is a table in which each of monitoring targets and the reliability of the monitoring target are associated with each other. In the example of FIG. 5, the reliability of monitoring-target module A (monitoring-target module 1160) is 8, and the reliability of monitoring-target module B (monitoring-target module 1170) is 7. Each reliability can be changed according to a vehicle event. In other words, each reliability can be changed dynamically. It is to be noted that the reliability of each monitoring-target module is indicated as a numerical value in a range in which the upper limit is 10 and the lower limit is 0, and the reliability may be a variable capable of taking at least two levels each of which indicates the degree of the state of the monitoring-target module. In addition, the reliability may be represented as, for example, one of ranks such as "high", "medium", and "low".

With reference to FIG. 4 again, reliability manager 1186 also changes given reliability indicated in the reliability management table according to a reliability adjustment rule. For example, reliability manager 1186 changes the reliability (for example, represented as a variable capable of taking at least two levels) every time a vehicle event occurs. The reliability adjustment rule is stored in advance in table storage 1187 for example. FIG. 6 is a diagram illustrating one example of a reliability adjustment table according to the present embodiment.

As indicated in FIG. 6, the reliability adjustment rule is indicated in a table in which each of actions and the result of the action are associated with each other.

Each action is one example of a vehicle event that is a target according to which the reliability is changed, that is, whose level of reliability is changed. Examples of actions include "(i)ntegrity check completed", "(p)redetermined time elapsed", "(r)unning of predetermined distance finished", "(p)articular vehicle event occurred (positive)", "(p)articular vehicle event occurred (negative)", "(v)ehicle state changed (positive)", "(v)ehicle state changed (negative)" and "(r)eset". Examples are not limited thereto, and it is only necessary that at least one of these is included.

Here, "(i)ntegrity check completed" indicates that integrity check of monitoring-target software has been successfully completed; "(p)redetermined time elapsed" indicates that predetermined time has elapsed from a reference time or the time at which the previous integrity check was performed; and "(r)unning of predetermined distance finished" indicates that running of a predetermined distance from a reference position or the position at which the previous integrity check was performed has been finished. In addition, "(p)articular vehicle event occurred (positive)" indicates that a vehicle event which increases the security of a monitoring target has occurred, and "(p)articular vehicle event occurred (negative)" indicates that a vehicle event which decreases the security of a monitoring target has occurred. A particular vehicle event is, for example, an event based on an action onto vehicle 10 by an operator. Non-limiting examples of particular vehicle events include maintenance, repairment, etc., of a vehicle.

In addition, "(v)ehicle state changed (positive)" indicates that a vehicle state change which increases the security of a monitoring target has occurred, and, "(v)ehicle state changed (negative)" indicates that a vehicle state change which decreases the security of a monitoring target has occurred. In addition, "(r)eset indicates that a monitoring target has been rebooted (reboot has been successfully performed).

For example, 5 is added to the reliability of the monitoring target whose integrity check has been completed regardless of which one of monitoring targets the monitoring target is. In addition, when running of a predetermined distance has been finished, 1 is subtracted from the reliability of only monitoring-target module A among the monitoring targets.

As described above, vehicle events which change the levels of reliability may include integrity check of monitoring-target software, an elapse of predetermined time, and/or reset (reboot) of a monitoring target.

It is to be noted that the table in FIG. 6 may include setting a negative value as a result when integrity check has been failed. In addition, "+10" is indicated as the result of "(r)eset", which indicates that 10 is added to the reliability of the monitoring target after the reset. In addition, the reliability may be changed to a reference value (for example, an initial value) after reset.

With reference to FIG. 4 again, reliability manager 1186 also restricts the functions of monitoring-target module 1160 using the function restriction table. The function restriction table is, for example, stored in table storage 1187 in advance.

FIG. 7 is a diagram indicating one example of a function restriction table according to the present embodiment.

As indicated in FIG. 7, the function restriction table is a table in which each of restriction details and the threshold value of the restriction detail are associated with each other.

Each restriction detail indicates the detail of the function restriction that is placed onto a corresponding one of the monitoring targets whose reliability has fallen below the threshold value. The restriction detail is one example of restriction on at least a part of the functions of the corresponding one of the monitoring targets according to the reliability of the monitoring target. The threshold value indicates the reliability value based on which restriction is executed. In the example of FIG. 7, communication to monitoring-target module 1160 from another VM is restricted when the threshold value becomes less than 5 for example, and the operation is stopped when the threshold value becomes less than 1. In this way, restriction details may be strengthened step by step with decrease in reliability.

As described above, restriction on at least a part of functions according to the reliability of each monitoring target may include restriction on a communication function (for example, stop of a communication function) of the monitoring target or stop of operation by the monitoring target.

It is to be noted that the restriction on the communication function of the monitoring target is one example of stop of an access right that allows the monitoring target to access a particular resource. The access to the particular resource includes access to a communication function (communication module), access to a (particular) file, access to a part of functions of an OS, etc.

It is to be noted that in the present embodiment, each of the elements of monitoring module 1180 is mounted in vehicle 10. In other words, in the present embodiment, reliability manager 1186 and function restrictor 1163 are mounted in vehicle 10. In addition, vehicle network system 1000 may include at least reliability manager 1186 and function restrictor 1163.

### [1.5 One Example of Reliability Update Sequence]

FIG. 8 is a diagram indicating one example of a reliability update sequence (reliability management steps included in the monitoring method) according to the present embodiment. It is to be noted that each of steps S1101 to S1105 in FIG. 8 is scheduled to be performed periodically. In addition, although only an addition process is indicated in FIG. 8, a subtraction process may be performed.

(S1101) Monitoring module 1180 performs integrity check processing on monitoring-target module 1160 periodically. The integrity check processing here is intended to read a memory region of a module which is the target for the integrity check in order to detect manipulation of the memory region, calculate a hash value, compares the hash value calculated with the hash value that is held as correct data in advance to determine whether the hash value calculated matches the hash value as the correct data.

(S1102) Monitor 1183 determines whether the integrity check processing in Step S1101 has been successfully finished. In the case where monitor 1183 has determined that the integrity check processing in step S1101 has been successfully finished, for example, that the hash value calculated and the correct data match ("Y" indicated in S1102), reliability manager 1186 determines that no manipulation has been detected, and adding a value to the reliability of monitoring-target module A (monitoring-target module 1160) which is the check target. It is to be noted that, in the case where monitor 1183 has determined that the hash value calculated and the correct data match, reliability manager 1186 may change the reliability so that the possible maximum value is set (for example, reset the reliability).

In addition, in the case where monitor 1183 has determined that the integrity check processing in step S1101 has not been successfully finished, for example, that the hash value calculated and the correct data do not match ("N" indicated in S1102), reliability manager 1186 determines that an error has occurred, and skips the processing for changing the reliability of monitoring-target module A (monitoring-target module 1160).

It is to be noted that in the case where monitor 1183 has determined that the hash value calculated and the correct data do not match, reliability manager 1186 may subtract a value from the reliability of monitoring-target module A which is the check target. It is only necessary for reliability manager 1186 to change (update) the reliability by performing at least one of: adding the value to the reliability in the case where the integrity check has been successfully completed in step S1102; or subtracting the value from the reliability in the case where the integrity check has not been successfully completed in step S1102.

(S1103) Monitoring-target module 1170 receives maintenance processing from an outside tool (not illustrated), and notifies monitoring module 1180 that the maintenance processing has been successfully completed.

(S1104) Monitor 1183 of monitoring module 1180 determines whether or not the vehicle event notified corresponds to a particular vehicle event. For example, monitor 1183 checks (determines) whether or not the vehicle event notified is indicated in the reliability adjustment table. In the case where monitor 1183 has determined that the vehicle event notified is indicated in the reliability adjustment table ("Y" indicated in S1104), reliability manager 1186 changes the reliability of monitoring-target module B (monitoring-target module 1170) which is the target. The successful completion of the maintenance processing corresponds to "(p)articular vehicle event occurred (positive)", reliability manager 1186 adds "1" to the reliability of monitoring-target module 1170. In the opposite case where monitor 1183 has determined that the vehicle event notified is not indicated in the reliability adjustment table ("N" indicated in S1104), reliability manager 1186 skips the processing for changing the reliability of monitoring-target module B (monitoring-target module 1170).

It is to be noted that reliability manager 1186 may: subtract a value from the reliability of monitoring-target module B which is the check target in the case where "(p)articular vehicle event occurred (negative)" has been obtained as the result of determining whether or not the vehicle event is the particular vehicle event (negative) in Step S1104; and skip the processing for changing the reliability of monitoring-target module B in the case where "(p)articular vehicle event occurred (negative)" has not been obtained as the result of the same.

(S1105) Reliability manager 1186: subtracts a value from the reliability of each of all the monitoring-target modules in the case where predetermined time has elapsed ("Y" indicated in S1105) as the result of determining whether the predetermined time (one example of predetermined time) has elapsed; and skips the processing for changing the reliability of each of all the monitoring-target modules in the case where predetermined time has not elapsed ("N" indicated in S1105) as the result of determining whether the predetermined time has elapsed. Reliability manager 1186 may subtract a preset value from the reliability of each of all the monitoring-target modules every time preset time has elapsed. It is to be noted that the subtraction of the preset value from the reliability of each of all the monitoring-target modules performed in the case where predetermined time has elapsed is a non-limiting example, and a value may be subtracted from the reliability of only one or more particular monitoring-target modules among all the monitoring-target modules.

### [1.6 One Example of Determination Sequence Using Reliability]

FIG. 9 is a diagram indicating one example of a determination sequence (function restricting steps included in the monitoring method) using reliability according to the present embodiment. FIG. 9 indicates one example of a determination sequence using reliability performed at the time when monitoring-target module 1160 made a connection request to monitoring-target module 1170. Monitoring-target module 1170 is one example of a communication target of monitoring-target module 1160.

(S1201) Monitoring-target module 1160 requests a connection to monitoring-target module 1170.

(S1202) Monitoring-target module 1170 asks monitoring module 1180 whether or not connection to monitoring-target module 1160 is allowed.

(S1203) Monitoring module 1180 compares the current reliability of monitoring-target module 1160 with a threshold value, makes a determination as to whether or not monitoring-target module 1160 is allowed to communicate with another module, and transmits the determination result to monitoring-target module 1170.

(S1204) Monitoring-target module 1170 responds to the connection request from monitoring-target module 1160, based on the determination result received from monitoring module 1180. Monitoring-target module 1170: transmits a connection response indicating that connection is allowed to monitoring-target module 1160 in the case where monitoring-target module 1160 is allowed to communicate with another module ("Y" indicated in S1204); and transmits an error notification to monitoring-target module 1160 in the case where monitoring-target module 1160 is not allowed to communicate with another module ("N" indicated in S1204), and ends the processing for connection to monitoring-target module 1160. It is to be noted that display according to the error notification may be provided by display 1013.

Function restrictor 1163 of monitoring-target module 1160: does not restrict communication with monitoring-target module 1170 in the case where it has obtained the connection response; and restricts communication (forbids communication) with monitoring-target module 1170 in the case where it has obtained the error notification.

In this way, function restrictor 1163 forbids monitoring-target module 1160 from communicating with monitoring-target module 1170 when the reliability of monitoring-target module 1160 is less than the threshold value in the case where monitoring-target module 1160 tries to perform communication with monitoring-target module 1170. In this way, it is possible to prevent monitoring-target module 1160 whose reliability is low from communicating with monitoring-target module 1170. In an example case where monitoring-target module 1160 is suffering from hacking, it is possible to prevent monitoring-target module 1170 from being affected by the hacking by function restrictor 1163 restricting communication therebetween.

The processing in steps S1201 to S1204 indicated in FIG. 9 is executed, for example, before monitoring-target module 1160 starts communication with monitoring-target module 1170.

### [1.7 One Example of Sequence for Making Reliability Closer to Initial Value]

FIG. 10 is a diagram indicating one example of a sequence for making reliability closer to an initial value (reliability management steps included in the monitoring method) according to the present embodiment. FIG. 10 indicates one example of a sequence performed by monitoring module 1180 in order to make the reliability of monitoring-target module 1160 closer, by a value according to an action, to the initial value, with decrease in the reliability of monitoring-target module 1160. It is to be noted that each of steps S1301 to S1303 in FIG. 10 is scheduled to be performed periodically.

(S1301) Reliability manager 1186 determines whether or not the current reliability of monitoring-target module A (monitoring-target module 1160) is less than a threshold value. The threshold value here is a threshold value for determining whether or not to execute reboot. Reliability manager 1186 checks the current reliability of monitoring-target module 1160, and ends the processing in the case where the current reliability is larger than or equal to the threshold value ("N" indicated in S1301). In the opposite case where the current reliability of monitoring-target module 1160 is less than the threshold value ("Y" indicated in S1301), reliability manager 1186 instructs monitoring-target module 1160 to reboot itself.

(S1302) Monitoring-target module 1160 reboots itself, and notifies monitoring module 1180 of completion of the reboot. The completion of the reboot here means that the reboot has been successfully completed.

(S1303) Reliability manager 1186 adds a value to the reliability of monitoring-target module A (monitoring-target module 1160). It is only necessary for reliability manager 1186 to perform at least one of: adding the value to the reliability of monitoring-target module A or resetting the reliability to an initial value when the reboot has been successfully completed, or subtracting a value from the reliability when the reboot has not been successfully completed.

### [1.8 Advantageous Effects of Embodiment 1]

Vehicle network system 1000 (monitoring system) indicated in Embodiment 1 is capable of securing safety as the entirety of integrated ECU 1100 by restricting the part of functions according to the time elapsed after the date and time of the last check of the monitoring-target module that is the monitoring target to reduce the possibility that the monitoring-target module whose reliability has decreased is manipulated and becomes a threat against other modules.

It is to be noted that the present disclosure may be implemented as monitoring module 1180 (one example of a monitoring device) for monitoring vehicle 10 or each of monitoring targets that operate inside the vehicle. The present disclosure may be implemented as monitoring module 1180 included in vehicle network system 1000, together with function restrictor 1163 (one example of a function restricting device) for placing a function restriction on monitoring vehicle 10 or monitoring targets that operate inside the vehicle. Monitoring module 1180 may be configured to include reliability manager 1186 that manages the reliability of each monitoring target according to a vehicle event of the monitoring target. In addition, the present disclosure may be implemented as a function restricting device that is include in vehicle network system 1000 and is configured to include function restrictor 1163 which restricts at least a part of functions of each monitoring target based on the reliability according to a vehicle event. In other words, each of reliability manager 1186 and function restrictor 1163 may be implemented as an individual device.

### [Variation of Embodiment 1]

Although a method performed by monitoring module 1180 in order to manage the reliability of each monitoring target has been described in Embodiment 1, in this variation, an example of a method in which a monitoring-target module manages the own reliability is described with reference to the drawings. It is to be noted that descriptions of elements similar to those in Embodiment 1 are omitted. Furthermore, elements and processing steps similar to those in Embodiment 1 are assigned with the same numerical references, and descriptions thereof are omitted.

### [1.1.1 Configuration Diagram of Monitoring-target Module 11160]

FIG. 11 is a diagram illustrating one example of a configuration of monitoring-target module 11160 according to the present variation.

As illustrated in FIG. 11, monitoring-target module 11160 includes communication unit 1161, function processor 1162, function restrictor 1163, vehicle state obtainer 11164, reliability manager 11165, and table storage 11166. It is to be noted that monitoring-target module 11170 (see FIG. 14) is configured similarly, and thus a description thereof is omitted.

Vehicle state obtainer 11164 obtains, as vehicle state information, the running state of vehicle 10, a particular event which occurs inside vehicle 10, etc. For example, vehicle state obtainer 11164 may obtain vehicle state information from each of sensors, etc., mounted in vehicle 10. Vehicle state obtainer 11164 notifies reliability manager 11165 of the vehicle state information obtained.

Reliability manager 11165 manages own reliability (here, monitoring-target module 11160) using a reliability management table. Reliability manager 11165 stores the reliability management table in which the value of the own reliability is stored into table storage 11166. FIG. 12 is a diagram illustrating one example of the reliability management table according to the present variation.

As illustrated in FIG. 12, reliability management table includes the own reliability. In the example of FIG. 12, the own reliability (for example, monitoring-target module 11160) is 8. It is to be noted that the reliability table does not include the reliability of any monitoring target other than the monitoring target itself.

With reference to FIG. 11 again, reliability manager 11165 also changes given reliability indicated in the reliability management table according to one of reliability adjustment rules. The reliability adjustment rules are stored in advance in table storage 11166 for example. One example of the reliability adjustment table is the same as in Embodiment 1 (see FIG. 6), a description thereof is omitted.

In addition, reliability manager 11165 restricts a part of functions of the monitoring-target module (that is the monitoring target itself) using a function restriction table. The function restriction table is, for example, stored in table storage 11166 in advance. One example of the function restriction table is the same as in Embodiment 1 (see FIG. 7), a description thereof is omitted.

### [1.1.2 Configuration Diagram of Monitoring Module 11180]

FIG. 13 is a diagram illustrating one example of monitoring module 11180 according to the present embodiment.

As illustrated in FIG. 13, monitoring module 11180 includes communication unit 11181, monitor 11183, monitoring information storage 1184, and monitoring log storage 1185.

Communication unit 11181 takes a role for communicating with hypervisor 1120, the OS which operates in another VM, the module and a process which operate in the OS, etc. Communication unit 11181 transmits mainly the result of check by monitor 11183 to another module. Communication unit 11181 is configured to include communication circuitry.

Monitor 11183 checks the integrity of a module, a VM file, or a memory region which is a monitoring target, using a hash value (correct data), etc., required for integrity check stored in monitoring information storage 1184. Monitor 11183 stores the check result into monitoring log storage 1185, and transmits the check result to another module via communication unit 11181.

### [1.1.3 One Example of Reliability Update Sequence]

FIG. 14 is a diagram indicating one example of a reliability update sequence (reliability management steps included in the monitoring method) according to the present variation. It is to be noted that each of steps S11001 to S11005 in FIG. 14 is scheduled to be performed periodically.

(S11001) Monitor 11183 of monitoring module 11180 determines whether the integrity check processing in Step S1101 has been successfully finished. Monitor 11183 determines that no manipulation, etc., have been detected in the case where the integrity check processing in Step S1101 has been successfully finished ("Y" indicated in S11001), and notifies monitoring-target module 11160 of the check result notification indicating the fact. In the opposite case where the integrity check processing in Step S1101 has not been successfully finished ("N" indicated in S11001), monitor 11183 determines that an error has occurred, and skips issuing a notification to monitoring-target module 11160.

Monitor 11183 performs, for example, Steps S1101 and S11001 for each of a plurality of monitoring targets. It is to be noted that, when the integrity check processing in Step S1101 has not been successfully finished, monitor 11183 may notify monitoring-target module 11160 of the check result notification indicating the fact.

(S11002) Reliability manager 11165 of monitoring-target module 11160 that has received the notification updates (here, adds a value to) the own reliability that monitoring-target module 11160 itself manages. It is to be noted that reliability manager 11165 may change the own reliability (of monitoring-target module 11160) upon obtaining the check result notification indicating that the integrity check processing has been successfully finished.

(S11003) Monitoring-target nodule 11170 executes maintenance processing upon receiving maintenance processing from an outside tool (not illustrated).

(S11004) A reliability manager of monitoring-target module 11170 determines whether or not a vehicle event that has occurred corresponds to a particular vehicle event. For example, the reliability manager checks (determines) whether or not the vehicle event occurred is indicated in the reliability adjustment table. When determining that the vehicle event is indicated therein ("Y" indicated in S11004), the reliability manager changes the own reliability (monitoring-target module B). Successful completion of the maintenance processing corresponds to "(p)articular vehicle event occurred" indicated in FIG. 6, the reliability manager adds 1 to the own reliability. When determining that the vehicle event is not indicated therein ("N" indicated in S11004), the reliability manager skips the process for changing the own reliability.

(S11005) Each of reliability manager 11165 of monitoring-target module 11160 and the reliability manager of monitoring-target module 11170 determines whether or not predetermined time has elapsed. Reliability manager 11165 updates (here, subtracts a value from) the own reliability (the reliability of monitoring-target module A) when predetermined time has elapsed ("Y" indicated in S11005), and skips the processing for changing the own reliability when predetermined time has not elapsed ("N" indicated in S11005). Likewise, the reliability manager of monitoring-target module 11170 updates (here, subtracts a value from) the own reliability (the reliability of monitoring-target module B) when predetermined time has elapsed ("Y" indicated in S11005), and skips the processing for changing the own reliability when predetermined time has not elapsed ("N" indicated in S11005).

In this way, in Step S11005, each of monitoring-target module 11160 and monitoring-target module 11170 subtracts a preset value from the own reliability that the module itself manages.

### [1.1.4 One Example of Determination Sequence Using Reliability]

FIG. 15 is a diagram indicating one example of a determination sequence (function restricting steps included in the monitoring method) using reliability according to the present variation. FIG. 15 indicates the one example of the determination sequence using the reliability, at the time when monitoring-target module 11160 has made a request for connection to monitoring-target module 11170.

(S11201) Monitoring-target module 11160 determines whether or not the own reliability is larger than or equal to a threshold value. It can be said that monitoring-target module 11160 compares the current own reliability with the threshold value, and makes a determination as to whether or not monitoring-target module 11160 itself can communicate with the another module. Monitoring-target module 11160 ends the processing as an error when the determination result indicates that communication is impossible ("N" indicated in S11201), that is, when the reliability has been determined to be less than the threshold value. When the determination result indicates that communication is possible ("Y" indicated in S11201), that is, when it has been determined that the reliability is larger than or equal to the threshold value, monitoring-target module 11160 makes a request for connection to monitoring-target module 11170.

It is to be noted that, when the determination result indicates that communication is impossible, monitoring-target module 11160 may notify monitoring module 11180 of the determination result. In addition, the threshold value may be preset and, for example, may be stored in table storage 11166.

(S11202) Upon receiving the connection request from monitoring-target module 11160, monitoring-target module 11170 determines whether or not the current own reliability is larger than or equal to the threshold value. It can be said that monitoring-target module 11170 compares the current own reliability with the threshold value, and makes a determination as to whether or not monitoring-target module 11170 itself can communicate with the another module. Based on the determination result, monitoring-target module 11170 responds to the connection request from monitoring-target module 11160. In an example case where the determination result indicates that communication is impossible ("N" indicated in S11202), that is, when the reliability has been determined to be less than the threshold value, monitoring-target module 11170 transmits an error notification to monitoring-target module 11160, and ends the connection processing to monitoring-target module 11160. In the opposite case where the determination result indicates that communication is possible ("Y" indicated in S11202), that is, when the reliability has been determined to be larger than or equal to the threshold value, monitoring-target module 11170 transmits a connection response that allows connection to monitoring-target module 11160.

In this way, in the present variation, each of monitoring-target module 11160 and monitoring-target module 11170 determines the own reliability. Only when both the reliability of monitoring-target module 11160 and the reliability of monitoring-target module 11170 are greater than or equal to the threshold value, monitoring-target module 11160 and monitoring-target module 11170 are to communicate with each other. In other words, in the present variation, monitoring module 11180 does not get involved in the determination as to whether communication is possible or impossible. It is to be noted that the threshold value used in the determination in Step S11201 and the threshold value used in the determination in Step S11202 may be a common value, or may be mutually different values.

It can also be said that, in the case where monitoring-target module 11160 and monitoring-target module 11170 try to communicate with each other, the function restrictors (here, function restrictor 1163 and the function restrictor included in monitoring-target module 11170) included in the vehicle network system according to the present variation forbid communication between monitoring-target module 11160 and monitoring-target module 11170 when at least one of the reliability of monitoring-target module 11160 or the reliability of monitoring-target module 11170 is less than the threshold value.

### [1.1.5 One Example of Sequence for Making Reliability Closer to Initial Value]

FIG. 16 is a diagram indicating one example a sequence for making reliability closer to an initial value according to the present variation. FIG. 16 indicates the one example of the sequence for making the reliability of monitoring-target module 11160 closer, by a value according to an action, to the initial value, with decrease in the own reliability of monitoring-target module 11160. It is to be noted that each of Steps S11301 to S11303 in FIG. 16 is scheduled to be performed periodically.

(S11301) Monitoring-target module 11160 determines whether or not current own reliability is less than a threshold value. Monitoring-target module 11160 ends the processing when the reliability is greater than or equal to the threshold value ("N" indicated in S11301). In addition, monitoring-target module 11160 instructs reboot when the own reliability of the module is less than the threshold value ("Y" indicated in S11301).

(S11302) When the result in Step S11301 indicates that the own reliability is less than the threshold value, monitoring-target module 11160 reboots.

(S11303) When the reboot has been successfully completed, monitoring-target module 11160 adds a value to the own reliability. Monitoring-target module 11160 adds the value to the own reliability because there is a possibility that the reboot is not successfully completed when the memory region of the module, or the like has been manipulated. It is to be noted that, when the reboot has been successfully completed, monitoring-target module 11160 sets the own reliability as an initial value.

It is to be noted that the processing indicated in FIG. 16 may be executed by, for example, reliability manager 11165 of monitoring-target module 11160.

### [1.1.6 Advantageous Effects of the Variation of Embodiment 1]

In the vehicle network system indicated in the variation of Embodiment 1, it is possible to reduce the size of codes required for monitoring module 11180 by the self-management of the reliability of each module, and facilitate operation on the TrustedOS. In this way, a cost reduction effect can be expected, and it becomes possible to secure safety of the entirety of integrated ECU 1100 by reducing the possibility that the monitoring-target module whose reliability has decreased in a wider system is manipulated and becomes a threat against the other modules.

### [Embodiment 2]

Monitoring module 1180 (one example of a monitoring device) described in Embodiment 1 (1) is present on the ECU, (2) handles the module unit that operates on the particular ECU in vehicle 10 as a monitoring target whose reliability is to be monitored, and (3) represents the reliability as a numerical value. However, monitoring module 1180 may (1') be present outside vehicle 10, (2') handle, for example, a unit of a VM, an ECU, or vehicle 10 as a monitoring target whose reliability is to be monitored, without being limited to the module unit, and (3') represent the reliability as a state of OK, NG, or the like instead of the numerical value. Embodiment 2 describes one example as indicated above.

### [2. Configuration of System]

Here, network system 2000 according to an embodiment of the present disclosure is described with reference to the drawings. It is to be noted that descriptions of drawings similar to those in Embodiment 1 are omitted. Furthermore, elements and processing steps similar to those in Embodiment 1 are assigned with the same numerical references, and descriptions thereof are omitted.

### [2.1 Overall Configuration of Network System 2000]

FIG. 17 is a diagram illustrating one example of an overall configuration of network system 2000 according to the present embodiment. Network system 2000 is one example of a monitoring system.

As illustrated in FIG. 17, network system 2000 includes vehicle 11 and server 20 that is communicatively connected with vehicle 11. Vehicle 11 includes, as a vehicle network system inside thereof, brake 1011, engine 1012, display 1013, and integrated ECU 2100 which connects with all the elements listed earlier. Here, integrated ECU 2100 has both a communication unit for inside of vehicle 11 and a communication unit for outside of vehicle 11.

### [2.2 Configuration Diagram of Integrated ECU 2100]

FIG. 18 is a diagram illustrating one example of a configuration of integrated ECU 2100 according to the present embodiment.

As illustrated in FIG. 18, it is assumed that integrated ECU 2100 is in an environment where hypervisor 1120 and a trusted execution environment (hereinafter, TEE) 1130 operate on a SoC which is hardware, and virtual machines (hereinafter, VMs) (not illustrated) are booted on hypervisor 1120, and different operating systems (hereinafter, OSs) operate on the VMs.

In the present embodiment, monitoring-target OS 2140 and monitoring-target OS 2150 are monitoring targets. Monitoring module 2180 which monitors monitoring-target OS 2140 and monitoring-target OS 2150 operate on TEE 1130. Furthermore, function restricting module 2160 operates on monitoring-target OS 2140, and function restricting module 2170 operates on monitoring-target OS 2150. Function restricting module 2160 and function restricting module 2170 each have functions similar to those of function restrictor 1163 illustrated in FIG. 3. Function restricting modules 2160 and 2170 are each one example of a function restrictor.

It is to be noted that, hereinafter, monitoring-target OS 2140 is also referred to as monitoring-target OS-A, and monitoring-target OS 2150 is also referred to as monitoring-target OS-B.

### [2.3 Configuration Diagram of Monitoring Module 2180]

FIG. 19 is a diagram illustrating one example of monitoring module 2180 according to the present embodiment.

As illustrated in FIG. 19, monitoring module 2180 includes communication unit 2181, vehicle state obtainer 2182, monitor 2183, monitoring information storage 1184, and monitoring log storage 1185.

Communication unit 2181 performs communication with hypervisor 1120, the OS that operates on each of other VMs, the module, the process, etc., that operate in the OS which operates in another VM, and further takes a role for communicating with server 20 outside vehicle 11. Communication unit 2181 notifies server 20 of mainly the result of check by monitor 2183, a vehicle state received by vehicle state obtainer 2182, etc., and notifies the another module of the result of a determination by server 20. Communication unit 2181 includes communication circuitry (a communication module).

Vehicle state obtainer 2182 obtains, as vehicle state information, the running state of vehicle 11, a particular event which occurs inside vehicle 11, etc. Vehicle state obtainer 2182 notifies server 20 of the vehicle state information received via communication unit 2181. It is to be noted that the vehicle state information can be obtained from various kinds of sensors mounted in vehicle 11.

Monitor 2183 checks the integrity of a VM file, or a memory region which is a monitoring target, using for example a hash value (correct data), etc., required for integrity check stored in monitoring information storage 1184. Monitor 2183 stores the check result into monitoring log storage 1185, and notifies server 20 of the check result via communication unit 2181.

### [2.4 Configuration of Server 20]

FIG. 20 is a diagram illustrating one example of a configuration of server 20 according to the present embodiment.

As illustrated in FIG. 20, server 20 includes communication unit 21, display unit 22, reliability manager 23, and table storage 24.

Communication unit 21 takes a role for communicating with vehicle 11.

Display unit 22 is a display device which displays information indicating a monitoring target (for example, monitoring-target module) and the reliability of the monitoring target together. Display unit 22 is implemented as, for example, a liquid crystal display, or the like.

Reliability manager 23 manages the reliability of the monitoring-target module, using vehicle state information, a check result, and a reliability management table which have been received from vehicle 11. The reliability management table indicates, for each of monitoring-target modules, the reliability of the monitoring target, and is stored in table storage 24.

FIG. 21 is a diagram illustrating one example of a reliability management table according to the present embodiment.

As indicated in FIG. 21, reliability management table is a table in which each of monitoring targets and the reliability of the monitoring target are associated with each other. In the example of FIG. 21, the reliability of monitoring-target OS-A (monitoring-target OS 2140) is indicated as OK, and the reliability of monitoring-target OS-B (monitoring-target OS 2150) is indicated as NG. In this way, reliability may be represented as one of two-level degrees (for example, a determination result).

With reference to FIG. 20 again, reliability manager 23 also changes given reliability indicated in the reliability management table according to one of reliability adjustment rules. For example, reliability manager 23 changes the reliability, for example, every time a vehicle event occurs. The reliability adjustment rules are stored in advance in table storage 24 for example. FIG. 22 is a diagram illustrating one example of a reliability adjustment table according to the present embodiment.

As indicated in FIG. 22, the reliability adjustment rules are indicated in a table in which each of actions and the result of the action are associated with each other. The actions include presence/absence of occurrence of an error and reset. In addition, the actions may include a predetermined times (for example, five or more times) of occurrence of an error.

With reference to FIG. 20 again, reliability manager 23 also restrict a part of functions of a monitoring-target module using the function restriction table. The function restriction table is, for example, stored in table storage 24 in advance.

FIG. 23 is a diagram indicating one example of the function restriction table according to the present embodiment.

As indicated in FIG. 23, the function restriction table is a table in which each of restriction details and the target state of the restriction detail are associated with each other. The restriction details include restriction on communication to another vehicle and stop of operation by the another vehicle.

Although each of FIG. 18 and FIG. 20 describes the example in which server 20 includes reliability manager 23, and integrated ECU 2100 includes the function restrictor (function restricting module), it is to be noted that server 20 may include a function restrictor instead of reliability manger 23 or together with reliability manager 23. In other words, server 20 may include at least one of reliability manager 23 or the function restrictor.

### [2.5 One Example of Reliability Update Sequence]

FIG. 24 is a diagram indicating one example of a reliability update sequence (reliability management steps included in the monitoring method) according to the present embodiment. It is to be noted that each of Steps S1101, and S2103 to S2105 in FIG. 24 is scheduled to be performed periodically.

(S2103) Monitoring module 2180 determines whether an error has occurred, for example, whether the integrity check processing in Step S1101 has been successfully finished.

(S2104) When determining that an error has occurred ("Y" indicated in S2103), that is, when the integrity check processing in Step S1101 has not been successfully finished, monitoring module 2180 changes the reliability of monitoring-target OS-A (monitoring-target OS 2140) with reference to a reliability adjustment table. For example, monitoring module 2180 sets the reliability to an OK state when the integrity check has been successfully finished, or the number of times of success of integrity check has exceeded a predetermined number of times, and sets the reliability to an NG state when the integrity check has been failed, or the number of times of error of integrity check has exceeded a predetermined number of times.

(S2105) Monitoring module 2180 stores, as a log, the result of the reliability changed in Step S2104, and uploads the same result to server 20.

### [2.6 One Example of Determination Sequence Using Reliability]

FIG. 25 is a diagram indicating one example of a determination sequence (function restricting steps included in the monitoring method) using reliability according to the present embodiment. FIG. 25 indicates the one example of the determination sequence using the reliability at the time when monitoring-target OS 2140 made a request for connection to outside. A device as the connection destination in the communication to outside is one example of monitoring-target OS 2140.

(S2201) Monitoring-target OS 2140 requests for connection to monitoring module 2180.

(S2202) Monitoring module 2180 asks server 20 whether connection with monitoring-target OS 2140 is allowed.

(S2203) Server 20 determines whether connection to outside is allowed based on the reliability of monitoring-target OS-A (monitoring-target OS 2140). For example, server 20 checks the reliability of monitoring-target OS 2140 and a function restriction table, makes a determination as to whether monitoring-target OS 2140 is allowed to communicate with outside, and transmits the determination result to monitoring module 2180.

(S2204) Monitoring module 2180 responds to the connection request from monitoring-target OS 2140 based on the determination result received from server 20. Monitoring module 2180 transmits, to monitoring-target OS 2140, a connection allowance response that allows connection when monitoring-target OS 2140 is allowed to communicate with outside ("Y" indicated in S2204). When monitoring-target OS 2140 is not allowed to communicate with outside ("N" indicated in S2204), monitoring module 2180 transmits an error notification to monitoring-target OS 2140, and ends the processing for external connection in monitoring-target OS 2140.

Upon obtaining the connection allowance response, function restricting module 2160 (one example of a function restrictor) of monitoring-target OS 2140 does not restrict communication with a device (one example of a communication target) present outside vehicle 11. Upon obtaining the error notification, function restricting module 2160 restricts (forbids) communication with the device present outside vehicle 11.

In this way, in the case where monitoring-target OS 2140 tries to communicate with the outside device of vehicle 11, function restricting module 2160 forbids monitoring-target OS 2140 from communicating with the outside device when the reliability of monitoring-target OS 2140 is less than a threshold value. In this way, it is possible to prevent monitoring-target OS 2140 whose reliability is low from communicating with the device present outside vehicle 11.

The processing in Steps S2201 to S2204 indicated in FIG. 25 is executed, for example, before monitoring-target OS 2140 starts communication with a communication target.

### [2.7 One Example of Sequence for Making Reliability Closer to Initial Value]

FIG. 26 is a diagram indicating one example of a sequence for making reliability closer to an initial value according to the present embodiment. FIG. 26 indicates one example of a sequence in which server 20 makes the reliability of monitoring-target OS 2140 closer, by a value according to an action, to the initial value via monitoring module 2180, with the change of the reliability of monitoring-target OS 2140. It is to be noted that each of Steps S2301 to S2305 in FIG. 26 is scheduled to be performed periodically.

(S2301) Server 20 determines whether the current reliability of monitoring-target OS-A (monitoring-target OS 2140) is less than a threshold value. Server 20 ends the processing when the reliability of monitoring-target OS 2140 is not less than the threshold value (the reliability is larger than or equal to the threshold value) ("N" indicated in S2301), that is, when the reliability indicates an OK state. When the reliability of monitoring-target OS 2140 is less than the threshold value ("Y" indicated in S2301), that is, when the reliability indicates an NG state, server 20 instructs reboot of monitoring-target OS 2140.

(S2302) Upon obtaining the instruction indicating reboot of monitoring-target OS 2140 from server 20, monitoring module 2180 instructs monitoring-target OS 2140 to reboot (transmits a reboot instruction).

(S2303) In the case where the reboot has been successfully completed, monitoring-target OS 2140 notifies monitoring module 2180 of the completion of the reboot (transmits a reboot completion notification).

(S2304) Upon obtaining the notification indicating the completion of the reboot, monitoring module 2180 notifies server 20 that the reboot of monitoring-target OS 2140 has been completed (transmits a reboot completion notification).

(S2305) Server 20 changes the reliability of monitoring-target OS 2140. Here, server 20 adds a value to the reliability of monitoring-target OS 2140.

### [2.8 Advantageous Effects of Embodiment 2]

Monitoring device indicated in Embodiment 2 places a function restriction according to the check result by the monitoring-target OS, thereby reducing the possibility that the monitoring-target module whose reliability has decreased is manipulated and becomes a threat against the other modules, which makes it possible to secure safety of the entirety of integrated ECU 2100.

### [Other Embodiments]

### [3. Other Variations]

Although the present disclosure has been described based on each of the embodiments, the present disclosure is not limited to the embodiments as a matter of course. Cases as described below are also included in the present disclosure. It is to be noted that each of FIGs. 27 to 35 described below is a diagram indicating one example of a configuration of an integrated ECU.

(1) Although, in each of the embodiments, integrity check of software is indicated as one example where a value is added to reliability, and a vehicle event that is an elapse of predetermined time is indicated as one example where a value is subtracted from reliability, vehicle events are not limited thereto. For example, as indicated in FIG. 6, an addition target or a subtraction target may be determined for each vehicle event, or an addition target or a subtraction target may be determined for each vehicle running state. For example, examples of running states include start or end of running, start or end of stop, start or end of parking, start or end of connection to an external charger, start or end of charging, etc. In addition, examples of particular vehicle events that occur inside a vehicle include: start or completion of maintenance processing, start or end of communication to an external device, occurrence of a security error or failure, update of an ECU, and a function check of an ECU by an external maintenance tool. Furthermore, although items for reliability adjustment can be set for each of the modules in each of the above embodiments, such items for reliability adjustment may be set uniformly for all the monitoring targets.
(2) Although the variation of Embodiment 1 describes the example in which the monitoring module performs integrity check of software of the monitoring-target module, and directly notifying the result, all the modules inside a vehicle may be notified of such a result as a vehicle event. The monitoring-target module can receive the vehicle event, and reflect the result to the own reliability.
(3) Although each of the above embodiments describes the monitoring device which handles, as its target, the integrated ECU that is an introduction environment for the hypervisor. For example, as illustrated in FIGs. 27, 28, and 29, the present disclosure may be implemented in an environment in which no hypervisor has been introduced. Each of FIGs. 27 to 29 is a diagram illustrating one example of a configuration of an integrated ECU according to another embodiment. FIG. 27 illustrates an example in which a monitoring module monitors monitoring-target modules A and B in the same monitoring-target OS. FIG. 28 illustrates an example in which a monitoring module monitors a monitoring-target OS. FIG. 29 illustrates an example in which a monitoring module monitors a monitoring-target module inside a monitoring-target OS. At that time, the monitoring module may operate on TEE 1130, or on the same OS as the OS of the monitoring-target module.
(4) Although each of the above embodiments describes the example in which the unit of a monitoring target to which reliability is to be assigned is a module or an OS that operates on the OS, the units of a monitoring target are not limited thereto. As illustrated in FIG. 30, the hypervisor may be a monitoring target. Furthermore, for example, a monitoring target may be an ECU itself, a unit of functions (for example, an ADAS system) that are implemented by a plurality of ECUs, or a unit of a vehicle itself. Furthermore, the reliability manager may sum the reliability of each of modules in an OS to calculate the reliability of the OS, sum the reliability of each of OSs to calculate the reliability of an integrated ECU, or sum the reliability of each of ECUs in a vehicle to calculate the reliability of the vehicle.
(5) The monitoring module that operates on the TEE monitors all the monitoring targets in each of the above embodiments, which is a non-limiting example. For example, a monitoring module may operate on a hypervisor as illustrated in each of FIGs. 31 and 32, or may operate as hardware on a SoC. Alternatively, as illustrated in FIG. 33, a monitoring module may be provided for each monitoring target.
(6) Although each of the above embodiments describes the example in which the module or OS reboots itself as one example of making reliability closer to an initial value, an exclusive module for making reliability closer to an initial value may be disposed in a region outside a target. For example, as illustrated in FIG. 34, a hypervisor may reboot a VM, or a SoC may reboot itself, in order to make the reliability of a monitoring-target OS closer, by a value according to an action, to an initial value.
(7) Although each of the above embodiments describes the example in which the module or OS places a restriction as one example of function restriction, an exclusive module for function restriction may be disposed in a region outside a target. For example, as illustrated in FIG. 35, a function restricting module may be newly disposed inside a hypervisor, and the function restricting module may ask a monitoring module of the details of function restriction when the function restricting module relays communication between monitoring-target module A and monitoring-target module B and places a function restriction on monitoring-target module A and monitoring-target module B.
(8) Although each of the above embodiments uses reliability for determination in internal processing, a display screen that displays the reliability of each of monitoring targets may be provided so that the reliability is managed inside a server or vehicle. FIG. 36 is a diagram illustrating one example of display screen 22a according to another embodiment. FIG. 36 illustrates one example of the display screen in which the reliability of each of monitoring target is mapped onto the monitoring target. Each monitoring target is mapped together with its position in a layout, and the current reliability is displayed in a superimposed manner. The layout is one example, and is not limited thereto. For example, a display screen for displaying a table as a list of monitoring targets and the reliability of each monitoring target associated with each other is also possible. Furthermore, an operation display screen (for example, icons for operations) may be provided not only for displaying mere the states of the monitoring targets, but also for giving instructions such as selecting and resetting each monitoring target, stopping operation by each monitoring target, etc.
(9) Each of the devices according to the above embodiments is, specifically, a computer system configured with a microprocessor, a ROM, a RAM, a hard disk unit, a display unit, a keyboard, a mouse, and so on. A computer program is stored in the RAM or the hard disk unit. The respective devices achieve their functions through the microprocessor's operations according to the computer program. Here, the computer program is configured by combining a plurality of instruction codes indicating instructions for the computer in order to achieve predetermined functions.
(10) A part or all of the elements of the respective devices may be configured with a single system-LSI (Large-Scale Integration). The system-LSI is a super-multi-function LSI manufactured by integrating structural units on a single chip, and is specifically a computer system configured to include a microprocessor, a ROM, a RAM, and so on. A computer program is stored in the RAM. The system-LSI achieves its function through the microprocessor's operations according to the computer program.
(11) Furthermore, each of units of the respective devices may be made as separate individual chips, or as a single chip to include a part or all thereof.

Furthermore, although system-LSI is mentioned here, but there are instances where, due to a difference in the degree of integration, the designations IC, LSI, super LSI, and ultra LSI may be used. Furthermore, the means for circuit integration is not limited to an LSI, and implementation with a dedicated circuit or a general-purpose processor is also available. It is also possible to use a Field Programmable Gate Array (FPGA) that is programmable after the LSI is manufactured, and a reconfigurable processor in which connections and settings of circuit cells within the LSI are reconfigurable.

Furthermore, if integrated circuit technology that replaces LSI appear through progress in semiconductor technology or other derived technology, that technology can naturally be used to carry out integration of the functional blocks. Biotechnology is anticipated to apply.

(12) A part or all of the elements constituting the respective devices may be configured as an IC card which can be attached to and detached from the respective devices or as a stand-alone module. The IC card or the module is a computer system configured from a microprocessor, a ROM, a RAM, and so on. The IC card or the module may also be included in the aforementioned super-multi-function LSI. The IC card or the module achieves its functions through the microprocessor's operations according to the computer program. The IC card or the module may also be implemented to be tamper-resistant.
(13) The present disclosure may be implemented as the above method. In addition, the present disclosure may be implemented as computer programs for executing the above method, using a computer, and may also be implemented as digital signals including the computer program. The computer program may be a computer program for causing a computer to execute each of unique steps included in the monitoring method indicated in any one of FIGs. 8 to 10, FIGs. 14 to 16, and FIGs. 24 to 26.

Furthermore, the present disclosure may also be implemented as a computer program or digital signals stored on computer-readable recording media such as a flexible disc, a hard disk, a CD-ROM, an MO, a DVD, a DVD-ROM, a DVD-RAM, a BD (Blu-ray (registered trademark) Disc), and a semiconductor memory. Furthermore, the present disclosure may also be implemented as the digital signals stored on these recording media.

Furthermore, the present disclosure may also be implemented as the above computer program or digital signals transmitted via a telecommunication line, a wireless or wired communication line, a network represented by the Internet, a data broadcast, and so on.

The present disclosure may also be implemented as a computer system including a microprocessor and a memory, in which the memory stores the above computer program and the microprocessor operates according to the computer program.

Furthermore, it is also possible to execute another independent computer system by transmitting the program or the digital signals stored on the aforementioned recording media, or by transmitting the program or digital signals via the above network and the like.

(14) In addition, the vehicle network system according to each of the embodiment, etc., may be implemented as a single device, or a plurality of devices. When the vehicle network system is implemented by a plurality of devices, the elements of the vehicle network system may be divided into the plurality of devices in any way. When the vehicle network system is implemented by a plurality of devices, communication methods used between the plurality of devices are not particularly limited, and may be wireless communication or wired communication. In addition, wireless communication and wired communication may be combined between the plurality of devices.
(15) Furthermore, the order of steps which are executed in each of sequence diagrams are provided as an example for specifically explaining the present disclosure, and thus an order other than the above order is also possible. In addition, a part of the steps may be executed at the same time (in parallel) with another one or more steps, or a part of the steps may not be executed.
(16) In addition, at least one of the reliability management table, the reliability adjustment table, and the function restriction table may be different for each monitoring target or may be common to each monitoring target.
(17) In addition, although each of the above embodiments describes the example in which functions of a monitoring target are restricted using the reliability to which a value is added when the safety of the monitoring target has been confirmed by, for example, completion of integrity check, it is also possible to restrict functions of a monitoring target using a risk to which a value is added when the safety of the monitoring target has not been confirmed by, for example, uncompletion of integrity check. The reliability and risk are examples of indicators indicating security protection states of a vehicle.
(18) The embodiments and the variation may be combined in any way. In addition, the techniques according to the present disclosure are not limited thereto, and are applicable to other embodiments obtainable by optionally performing change, replacement, addition, omission, etc. For example, embodiments that may be conceived by those skilled in the art, as well as embodiments resulting from optional combinations of elements and functions from different embodiments may be included in the present disclosure as long as such embodiments do not depart from the scope of the present disclosure.

### [Industrial Applicability]

The present disclosure makes it possible to clarify the reliability of each of elements of a system, which allows to reduce damage that may be generated if abnormality occurs, thereby maintaining a safety state of the system.

### [Reference Signs List]

10, 11 vehicle
20 server
21, 1161, 1181, 2181, 11181 communication unit
22 display unit
22a display screen
23, 1186, 11165 reliability manager
24, 1187, 11166 table storage
1000 vehicle network system (monitoring system)
1011 brake
1012 engine
1013 display
1100, 2100 integrated ECU
1110 SoC
1120 hypervisor
1130 TEE
1140, 1150 OS
1160, 1170, 11160, 11170 monitoring-target module
1162 function processor
1163 function restrictor
1180, 2180, 11180 monitoring module
1182, 2182, 11164 vehicle state obtainer
1183, 2183, 11183 monitor
1184 monitoring information storage
1185 monitoring log storage
2000 network system (monitoring system)
2140, 2150 monitoring-target OS
2160, 2170 function restricting module

## Claims

1. A monitoring system (1000, 2000) for monitoring an integrated electronic control unit, ECU,(1100, 2100) in which functions of a plurality of ECUs are integrated and that operates inside a vehicle (10, 11), the integrated ECU (1100, 2100) being capable of operating a plurality of virtual machines, each of the plurality of virtual machines including a function of at least one ECU among functions of the plurality of ECUs,
wherein the monitoring system (1000, 2000) comprises a reliability manager (23, 1186, 11165) that is configured to handle one of the plurality of virtual machines as a first monitoring target (1160, 1170, 11160, 11170) for monitoring the functions of the plurality of ECUs, and is configured to manage a first reliability indicating a security protection state of the first monitoring target (1160, 1170, 11160, 11170), the first reliability being a variable capable of taking at least two levels each of which indicates a degree of the security protection state of the first monitoring target (1160, 1170, 11160, 11170), and
the monitoring system (1000, 2000):
is configured to perform an integrity check of software of the first monitoring target (1160, 1170, 11160, 11170);
to perform at least one of: changing a current level among the at least two levels to increase the degree of the security protection state indicated by the first reliability when the integrity check has been successfully completed; or changing the current level among the at least two levels to diminish the degree of the security protection state indicated by the first reliability when the integrity check has not been successfully completed; and
to change the current level among the at least two levels to diminish the degree of the security protection state indicated by the first reliability after an elapse of predetermined time from time at which the integrity check has been performed.

2. The monitoring system (1000, 2000) according to claim 1,
wherein the integrated ECU (1100, 2100) further operates a trusted execution environment, TEE, (1130), and
the integrity check is performed on the TEE (1130).

3. The monitoring system (1000, 2000) according to claim 1,
wherein the plurality of virtual machines that are capable of being operated by the integrated ECU (1100, 2100) operate on a hypervisor (1120), and
the monitoring system (1000, 2000) is further configured to monitor the hypervisor (1120).

4. The monitoring system (1000, 2000) according to claim 1,
wherein the monitoring system (1000, 2000) is configured to cause the first monitoring target (1160, 1170, 11160, 11170) to perform reboot.

5. The monitoring system (1000, 2000) according to claim 4,
wherein the monitoring system (1000, 2000) is configured to change the current level among the at least two levels to increase the degree of the security protection state indicated by the first reliability or change the first reliability to an initial value when the reboot has been successfully completed.

6. The monitoring system (1000, 2000) according to claim 4,
wherein the monitoring system (1000, 2000) is configured to determine whether the first reliability of the first monitoring target (1160, 1170, 11160, 11170) is less than a threshold value, and to cause the first monitoring target (1160, 1170, 11160, 11170) to execute the reboot when the first reliability is less than the threshold value.

7. The monitoring system (1000, 2000) according to claim 1, further comprising:
a function restrictor (1163) that is configured to place a restriction on at least a part of functions of the first monitoring target (1160, 1170, 11160, 11170) according to the first reliability.

8. The monitoring system (1000, 2000) according to claim 7,
wherein the restriction on the at least the part of the functions of the first monitoring target (1160, 1170, 11160, 11170) according to the first reliability of the first monitoring target (1160, 1170, 11160, 11170) includes suspending an access right to access a particular resource by the first monitoring target (1160, 1170, 11160, 11170).

9. The monitoring system (1000, 2000) according to claim 8,
wherein the restriction on the at least the part of the functions according to the first reliability of the first monitoring target (1160, 1170, 11160, 11170) includes suspending a communication function of the first monitoring target (1160, 1170, 11160, 11170).

10. The monitoring system (1000, 2000) according to claim 9,
wherein in a case where the first monitoring target (1160, 1170, 11160, 11170) tries to communicate with a communication target, the function restrictor (1163) is configured to forbid the first monitoring target (1160, 1170, 11160, 11170) from communicating with the communication target when the first reliability is less than a threshold value.

11. The monitoring system (1000, 2000) according to claim 9,
wherein the monitoring system (1000, 2000) is further configured to handle, as a second monitoring target, one virtual machine other than the first monitoring target (1160, 1170, 11160, 11170) among the plurality of virtual machines,
the reliability manager (23, 1186, 11165) is further configured to manage second reliability indicating a security protection state of the second monitoring target, and
in a case where the first monitoring target (1160, 1170, 11160, 11170) and the second monitoring target try to communicate with each other, the function restrictor (1163) is configured to forbid the first monitoring target (1160, 1170, 11160, 11170) and the second monitoring target from communicating with each other when at least one of the first reliability or the second reliability is less than the threshold value.

12. The monitoring system (1000, 2000) according to any one of claims 4 to 7,
wherein the restriction on the at least the part of the functions according to the first reliability of the first monitoring target (1160, 1170, 11160, 11170) includes suspending an operation of the first monitoring target (1160, 1170, 11160, 11170).

13. The monitoring system (1000, 2000) according to claim 7,
wherein the reliability manager (23, 1186, 11165) and the function restrictor (1163) are mounted in the vehicle (10,20).

14. The monitoring system (1000, 2000) according to claim 7,
wherein the monitoring system (1000, 2000) includes a server (20) that is communicatively connected to the vehicle (10,20), and
at least one of the reliability manager (23, 1186, 11165) or the function restrictor (1163) is implemented in the server (20).

15. The monitoring system (1000, 2000) according to any one of claims 1 to 7, further comprising:
a display unit (1013) that displays the first monitoring target (1160, 1170, 11160, 11170) and the first reliability together.

16. A monitoring method for monitoring an integrated electronic control unit (ECU) in which functions of a plurality of ECUs are integrated and that operates inside a vehicle, the integrated ECU being capable of operating a plurality of virtual machines, each of the plurality of virtual machines including a function of at least one ECU among functions of the plurality of ECUs,
wherein the monitoring method comprises reliability managing that handles one of the plurality of virtual machines as a monitoring target (1160, 1170, 11160, 11170) for monitoring the functions of the plurality of ECUs, and managing reliability indicating a security protection state of the monitoring target (1160, 1170, 11160, 11170), the reliability being a variable capable of taking at least two levels each of which indicates a degree of the security protection state of the monitoring target (1160, 1170, 11160, 11170), and
the monitoring method comprises:
performing integrity check of software of the monitoring target (1160, 1170, 11160, 11170);
performing at least one of: changing a current level among the at least two levels to increase the degree of the security protection state indicated by the reliability when the integrity check has been successfully completed; or changing the current level among the at least two levels to diminish the degree of the security protection state indicated by the reliability when the integrity check has not been successfully completed; and
changing the current level among the at least two levels to diminish the degree of the security protection state indicated by the reliability after an elapse of predetermined time from time at which the integrity check has been performed.

17. A monitoring device for monitoring an integrated electronic control unit (ECU) in which functions of a plurality of ECUs are integrated and that operates inside a vehicle, the integrated ECU being capable of operating a plurality of virtual machines, each of the plurality of virtual machines including a function of at least one ECU among functions of the plurality of ECUs,
wherein the monitoring device comprises a reliability manager that is configured to handle one of the plurality of virtual machines as a monitoring target (1160, 1170, 11160, 11170) for monitoring the functions of the plurality of ECUs, and to manage reliability indicating a security protection state of the monitoring target (1160, 1170, 11160, 11170), the reliability being a variable capable of taking at least two levels each of which indicates a degree of the security protection state of the monitoring target (1160, 1170, 11160, 11170), and
the monitoring device:
configured to perform integrity check of software of the monitoring target (1160, 1170, 11160, 11170);
to perform at least one of: changing a current level among the at least two levels to increase the degree of the security protection state indicated by the reliability when the integrity check has been successfully completed; or changing the current level among the at least two levels to diminish the degree of the security protection state indicated by the reliability when the integrity check has not been successfully completed; and
to change the current level among the at least two levels to diminish the degree of the security protection state indicated by the reliability after an elapse of predetermined time from time at which the integrity check has been performed.

## Patentansprüche

1. Überwachungssystem (1000, 2000) zum Überwachen eines integrierten elektronischen Steuergerätes (1100, 2100), in das Funktionen einer Vielzahl elektronischer Steuergeräte integriert sind und das im Inneren eines Fahrzeugs (10, 11) arbeitet, wobei das integrierte elektronische Steuergerät (1100, 2100) in der Lage ist, eine Vielzahl virtueller Maschinen zu betreiben, und jede der Vielzahl virtueller Maschinen von Funktionen der Vielzahl elektronischer Steuergeräte eine Funktion wenigstens eines elektronischen Steuergerätes einschließt,
wobei das Überwachungssystem (1000, 2000) eine Zuverlässigkeitsmanagement-Einrichtung (23, 1186, 11165) umfasst, die so ausgeführt ist, dass sie eine der Vielzahl virtueller Maschinen als ein erstes Überwachungs-Ziel (1160, 1170, 11160, 11170) zum Überwachen der Funktionen der Vielzahl elektronischer Steuergeräte führt, und so ausgeführt ist, dass sie eine erste Zuverlässigkeit verwaltet, die einen Sicherheitsschutz-Status des ersten Überwachungs-Ziels (1160, 1170, 11160, 11170) anzeigt, wobei die erste Zuverlässigkeit eine Variable ist, die wenigstens zwei Stufen annehmen kann, die jeweils einen Grad des Sicherheitsschutz-Status des ersten Überwachungs-Ziels (1160, 1170, 11160, 11170) anzeigen, und
wobei das Überwachungssystem (1000, 2000) konfiguriert ist zum:
Durchführen einer Integritätsprüfung von Software des ersten Überwachungs-Ziels (1160, 1170, 11160, 11170);
Durchführen von Änderung einer aktuellen Stufe der wenigstens zwei Stufen zum Erhöhen des Grades des durch die erste Zuverlässigkeit angezeigten Sicherheitsschutz-Status, wenn die Integritätsprüfung erfolgreich abgeschlossen worden ist; oder/und Änderung der aktuellen Stufe der wenigstens zwei Stufen zum Verringern des Grades des durch die erste Zuverlässigkeit angezeigten Sicherheitsschutz-Status, wenn die Integritätsprüfung nicht erfolgreich abgeschlossen worden ist; sowie
Ändern der aktuellen Stufe der wenigstens zwei Stufen zum Verringern des Grades des durch die erste Zuverlässigkeit angezeigten Sicherheitsschutz-Status nach Verstreichen vorgegebener Zeit von einem Zeitpunkt an, zu dem die Integritätsprüfung durchgeführt worden ist.

2. Überwachungssystem (1000, 2000) nach Anspruch 1,
wobei das integrierte elektronische Steuergerät (1100, 2100) des Weiteren eine vertrauenswürdige Ausführungsumgebung (1130) betreibt, und
die Integritätsprüfung in der vertrauenswürdigen Ausführungsumgebung (1130) durchgeführt wird.

3. Überwachungssystem (1000, 2000) nach Anspruch 1,
wobei die Vielzahl virtueller Maschinen, die durch das integrierte elektronische Steuergerät (1100, 2100) betrieben werden können, auf einem Hypervisor (1120) laufen, und
das Überwachungssystem (1000, 2000) des Weiteren so ausgeführt ist, dass es den Hypervisor (1120) überwacht.

4. Überwachungssystem (1000, 2000) nach Anspruch 1,
wobei das Überwachungssystem (1000, 2000) so ausgeführt ist, dass es das erste Überwachungs-Ziel (1160, 1170, 11160, 11170) veranlasst, einen Reboot durchzuführen.

5. Überwachungssystem (1000, 2000) nach Anspruch 4,
wobei das Überwachungssystem (1000, 2000) so ausgeführt ist, dass es die aktuelle Stufe der wenigstens zwei Stufen ändert, um den Grad des durch die erste Zuverlässigkeit angezeigten Sicherheitsschutz-Status zu erhöhen, oder die erste Zuverlässigkeit auf einen Ausgangswert ändert, wenn der Reboot erfolgreich abgeschlossen worden ist.

6. Überwachungssystem (1000, 2000) nach Anspruch 4,
wobei das Überwachungssystem (1000, 2000) so ausgeführt ist, dass es feststellt, ob die erste Zuverlässigkeit des ersten Überwachungs-Ziels (1160, 1170, 11160, 11170) unter einem Schwellenwert liegt, und das erste Überwachungs-Ziel (1160, 1170, 11160, 11170) veranlasst, den Reboot durchzuführen, wenn die erste Zuverlässigkeit unter dem Schwellenwert liegt.

7. Überwachungssystem (1000, 2000) nach Anspruch 1, das des Weiteren umfasst:
eine Funktionseinschränkungs-Einrichtung (1163), die so ausgeführt ist, dass sie entsprechend der ersten Zuverlässigkeit wenigstens einem Teil von Funktionen des ersten Überwachungs-Ziels (1160, 1170, 11160, 11170) eine Einschränkung auferlegt.

8. Überwachungssystem (1000, 2000) nach Anspruch 7,
wobei die Einschränkung des wenigstens einen Teils der Funktionen des ersten Überwachungs-Ziels (1160, 1170, 11160, 11170) entsprechend der ersten Zuverlässigkeit des ersten Überwachungs-Ziels (1160, 1170, 11160, 11170) Aussetzen eines Zugriffsrechtes zum Zugreifen auf eine bestimmte Ressource durch das erste Überwachungs-Ziel (1160, 1170, 11160, 11170) einschließt.

9. Überwachungssystem (1000, 2000) nach Anspruch 8,
wobei die Einschränkung des wenigstens einen Teils der Funktionen entsprechend der ersten Zuverlässigkeit des ersten Überwachungs-Ziels (1160, 1170, 11160, 11170) Aussetzen einer Kommunikationsfunktion des ersten Überwachungs-Ziels (1160, 1170, 11160, 11170) einschließt.

10. Überwachungssystem (1000, 2000) nach Anspruch 9,
wobei die Funktionseinschränkungs-Einrichtung (1163) so ausgeführt ist, dass sie dann, wenn das erste Überwachungs-Ziel (1160, 1170, 11160, 11170) versucht, mit einem Kommunikations-Ziel zu kommunizieren, es dem ersten Überwachungs-Ziel (1160, 1170, 11160, 11170) verbietet, mit dem Kommunikations-Ziel zu kommunizieren, wenn die erste Zuverlässigkeit unter einem Schwellenwert liegt.

11. Überwachungssystem (1000, 2000) nach Anspruch 9,
wobei das Überwachungssystem (1000, 2000) des Weiteren so ausgeführt ist, dass sie eine andere virtuelle Maschine der Vielzahl virtueller Maschinen als das erste Überwachungs-Ziel (1160, 1170, 11160, 11170) als ein zweites Überwachungs-Ziel führt, die Zuverlässigkeitsmanagement-Einrichtung (23, 1186, 11165) des Weiteren so ausgeführt ist, dass sie eine zweite Zuverlässigkeit verwaltet, die einen Sicherheitsschutz-Status des zweiten Überwachungs-Ziels anzeigt, und
die Funktionseinschränkungs-Einrichtung (1163) so ausgeführt ist, dass sie dann, wenn das erste Überwachungs-Ziel (1160, 1170, 11160, 11170) und das zweite Überwachungs-Ziel versuchen, miteinander zu kommunizieren, es dem ersten Überwachungs-Ziel (1160, 1170, 11160, 11170) und dem zweiten Überwachungs-Ziel verbietet, miteinander zu kommunizieren, wenn die erste Zuverlässigkeit oder/und die zweite Zuverlässigkeit unter dem Schwellenwert liegt/liegen.

12. Überwachungssystem (1000, 2000) nach einem der Ansprüche 4 bis 7,
wobei die Einschränkung des wenigstens einen Teils der Funktionen entsprechend der ersten Zuverlässigkeit des ersten Überwachungs-Ziels (1160, 1170, 11160, 11170) Aussetzen eines Betriebes des ersten Überwachungs-Ziels (1160, 1170, 11160, 11170) einschließt.

13. Überwachungssystem (1000, 2000) nach Anspruch 7,
wobei die Zuverlässigkeitsmanagement-Einrichtung (23, 1186, 11165) und die Funktionseinschränkungs-Einrichtung (1163) in dem Fahrzeug (10, 20) installiert sind.

14. Überwachungssystem (1000, 2000) nach Anspruch 7,
wobei das Überwachungssystem (1000, 2000) einen Server (20) einschließt, der kommunizierend mit dem Fahrzeug (10, 20) verbunden ist, und
die Zuverlässigkeitsmanagement-Einrichtung (23, 1186, 11165) oder/und die Funktionseinschränkungs-Einrichtung (1163) in dem Server (20) implementiert ist/sind.

15. Überwachungssystem (1000, 2000) nach einem der Ansprüche 1 bis 7, das des Weiteren umfasst:
eine Anzeige-Einheit (1013), die das erste Überwachungs-Ziel (1160, 1170, 11160, 11170) und die erste Zuverlässigkeit zusammen anzeigt.

16. Überwachungsverfahren zum Überwachen eines integrierten elektronischen Steuergerätes, in das Funktionen einer Vielzahl elektronischer Steuergeräte integriert sind und das im Inneren eines Fahrzeugs arbeitet, wobei das integrierte elektronische Steuergerät in der Lage ist, eine Vielzahl virtueller Maschinen zu betreiben, und jede der Vielzahl virtueller Maschinen von Funktionen der Vielzahl elektronischer Steuergeräte eine Funktion wenigstens eines elektronischen Steuergerätes einschließt,
wobei das Überwachungsverfahren Zuverlässigkeitsmanagement umfasst, mit dem eine der Vielzahl virtueller Maschinen zum Überwachen der Funktionen der Vielzahl elektronischer Steuergeräte als ein erstes Überwachungs-Ziel (1160, 1170, 11160, 11170) geführt wird und Zuverlässigkeit verwaltet wird, die einen Sicherheitsschutz-Status des Überwachungs-Ziels (1160, 1170, 11160, 11170) anzeigt, wobei die Zuverlässigkeit eine Variable ist, die wenigstens zwei Stufen annehmen kann, die jeweils einen Grad des Sicherheitsschutz-Status des Überwachungs-Ziels (1160, 1170, 11160, 11170) anzeigen, und
wobei das Überwachungsverfahren umfasst:
Durchführen von Integritätsprüfung von Software des Überwachungs-Ziels (1160, 1170, 11160, 11170);
Durchführen von Änderung einer aktuellen Stufe der wenigstens zwei Stufen zum Erhöhen des Grades des durch die Zuverlässigkeit angezeigten Sicherheitsschutz-Status, wenn die Integritätsprüfung erfolgreich abgeschlossen worden ist; oder/und Änderung der aktuellen Stufe der wenigstens zwei Stufen zum Verringern des Grades des durch die Zuverlässigkeit angezeigten Sicherheitsschutz-Status, wenn die Integritätsprüfung nicht erfolgreich abgeschlossen worden ist; sowie
Ändern der aktuellen Stufe der wenigstens zwei Stufen zum Verringern des Grades des durch die Zuverlässigkeit angezeigten Sicherheitsschutz-Status nach Verstreichen vorgegebener Zeit von einem Zeitpunkt an, zu dem die Integritätsprüfung durchgeführt worden ist.

17. Überwachungsvorrichtung zum Überwachen eines integrierten elektronischen Steuergerätes, in das Funktionen einer Vielzahl elektronischer Steuergeräte integriert sind, und das im Inneren eines Fahrzeugs arbeitet, wobei das integrierte elektronische Steuergerät in der Lage ist, eine Vielzahl virtueller Maschinen zu betreiben, und jede der Vielzahl virtueller Maschinen von Funktionen der Vielzahl elektronischer Steuergeräte eine Funktion wenigstens eines elektronischen Steuergerätes einschließt,
wobei die Überwachungsvorrichtung eine Zuverlässigkeitsmanagement-Einrichtung umfasst, die so ausgeführt ist, dass sie eine der Vielzahl virtueller Maschinen zum Überwachen der Funktionen der Vielzahl elektronischer Steuergeräte als ein Überwachungs-Ziel (1160, 1170, 11160, 11170) führt und Zuverlässigkeit verwaltet, die einen Sicherheitsschutz-Status des Überwachungs-Ziels (1160, 1170, 11160, 11170) anzeigt, wobei die Zuverlässigkeit eine Variable ist, die wenigstens zwei Stufen annehmen kann, die jeweils einen Grad des Sicherheitsschutz-Status des Überwachungs-Ziels (1160, 1170, 11160, 11170) anzeigen, und
wobei die Überwachungsvorrichtung konfiguriert ist zum:
Durchführen von Integritätsprüfung von Software des Überwachungs-Ziels (1160, 1170, 11160, 11170);
Durchführen von Änderung einer aktuellen Stufe der wenigstens zwei Stufen zum Erhöhen des Grades des durch die Zuverlässigkeit angezeigten Sicherheitsschutz-Status, wenn die Integritätsprüfung erfolgreich abgeschlossen worden ist; oder/und Änderung der aktuellen Stufe der wenigstens zwei Stufen zum Verringern des Grades des durch die Zuverlässigkeit angezeigten Sicherheitsschutz-Status, wenn die Integritätsprüfung nicht erfolgreich abgeschlossen worden ist; sowie
Ändern der aktuellen Stufe der wenigstens zwei Stufen zum Verringern des Grades des durch die Zuverlässigkeit angezeigten Sicherheitsschutz-Status nach Verstreichen vorgegebener Zeit von einem Zeitpunkt an, zu dem die Integritätsprüfung durchgeführt worden ist.

## Revendications

1. Système de surveillance (1000, 2000) pour surveiller une unité de commande électronique intégrée (ECU) (1100, 2100) dans lequel les fonctions d'une pluralité d'ECU sont intégrées et qui fonctionne à l'intérieur d'un véhicule (10, 11), l'ECU intégrée (1100, 2100) étant capable de faire fonctionner une pluralité de machines virtuelles, chacune de la pluralité de machines virtuelles incluant une fonction d'au moins une ECU parmi les fonctions de la pluralité d'ECU,
dans lequel le système de surveillance (1000, 2000) comprend un gestionnaire de fiabilité (23, 1186, 11165) qui est configuré pour gérer l'une parmi la pluralité de machines virtuelles en tant que première cible de surveillance (1160, 1170, 11160, 11170) pour surveiller les fonctions de la pluralité d'ECU, et est configuré pour gérer une première fiabilité indiquant un état de protection de la sécurité de la première cible de surveillance (1160, 1170, 11160, 11170), la première fiabilité étant une variable capable de prendre au moins deux niveaux dont chacun indique un degré de l'état de protection de la sécurité de la première cible de surveillance (1160, 1170, 11160, 11170), et
le système de surveillance (1000, 2000) :
est configuré pour effectuer un contrôle d'intégrité du logiciel de la première cible de surveillance (1160, 1170, 11160, 11170) ;
pour effectuer au moins l'une des opérations suivantes : modifier un niveau actuel parmi les au moins deux niveaux pour augmenter le degré de l'état de protection de la sécurité indiqué par la première fiabilité lorsque le contrôle d'intégrité a été effectué avec succès ; ou modifier le niveau actuel parmi les au moins deux niveaux pour diminuer le degré de l'état de protection de la sécurité indiqué par la première fiabilité lorsque le contrôle d'intégrité n'a pas été effectué avec succès ; et
modifier le niveau actuel parmi les deux niveaux au moins pour diminuer le degré de l'état de protection de la sécurité indiqué par la première fiabilité après un délai prédéterminé à partir du moment où le contrôle d'intégrité a été effectué.

2. Système de surveillance (1000, 2000) selon la revendication 1,
dans lequel l'ECU intégrée (1100, 2100) exploite en outre un environnement d'exécution de confiance (TEE) (1130), et
le contrôle d'intégrité est effectué sur le TEE (1130).

3. Système de surveillance (1000, 2000) selon la revendication 1,
dans lequel la pluralité de machines virtuelles pouvant être exploitées par l'ECU intégrée (1100, 2100) fonctionnent sur un hyperviseur (1120), et
le système de surveillance (1000, 2000) est en outre configuré pour surveiller l'hyperviseur (1120).

4. Système de surveillance (1000, 2000) selon la revendication 1,
dans lequel le système de surveillance (1000, 2000) est configuré pour amener la première cible de surveillance (1160, 1170, 11160, 11170) à effectuer un redémarrage.

5. Système de surveillance (1000, 2000) selon la revendication 4,
dans lequel le système de surveillance (1000, 2000) est configuré pour modifier le niveau actuel parmi les au moins deux niveaux pour augmenter le degré de l'état de protection de sécurité indiqué par la première fiabilité ou modifier la première fiabilité à une valeur initiale lorsque le redémarrage a été effectué avec succès.

6. Système de surveillance (1000, 2000) selon la revendication 4,
dans lequel le système de surveillance (1000, 2000) est configuré pour déterminer si la première fiabilité de la première cible de surveillance (1160, 1170, 11160, 11170) est inférieure à une valeur seuil, et pour amener la première cible de surveillance (1160, 1170, 11160, 11170) à exécuter le redémarrage lorsque la première fiabilité est inférieure à la valeur seuil.

7. Système de surveillance (1000, 2000) selon la revendication 1, comprenant en outre :
un restricteur de fonction (1163) qui est configuré pour placer une restriction sur au moins une partie des fonctions de la première cible de surveillance (1160, 1170, 11160, 11170) selon la première fiabilité.

8. Système de surveillance (1000, 2000) selon la revendication 7,
dans lequel la restriction sur au moins la partie des fonctions de la première cible de surveillance (1160, 1170, 11160, 11170) selon la première fiabilité de la première cible de surveillance (1160, 1170, 11160, 11170) inclut la suspension d'un droit d'accès à une ressource particulière par la première cible de surveillance (1160, 1170, 11160, 11170).

9. Système de surveillance (1000, 2000) selon la revendication 8,
dans lequel la restriction d'au moins la partie des fonctions selon la première fiabilité de la première cible de surveillance (1160, 1170, 11160, 11170) inclut la suspension d'une fonction de communication de la première cible de surveillance (1160, 1170, 11160, 11170).

10. Système de surveillance (1000, 2000) selon la revendication 9,
dans lequel, dans un cas où la première cible de surveillance (1160, 1170, 11160, 11170) tente de communiquer avec une cible de communication, le restricteur de fonction (1163) est configuré pour interdire à la première cible de surveillance (1160, 1170, 11160, 11170) de communiquer avec la cible de communication lorsque la première fiabilité est inférieure à une valeur seuil.

11. Système de surveillance (1000, 2000) selon la revendication 9,
dans lequel le système de surveillance (1000, 2000) est en outre configuré pour gérer, en tant que deuxième cible de surveillance, une machine virtuelle autre que la première cible de surveillance (1160, 1170, 11160, 11170) parmi la pluralité de machines virtuelles,
le gestionnaire de fiabilité (23, 1186, 11165) est en outre configuré pour gérer la deuxième fiabilité indiquant un état de protection de la sécurité de la deuxième cible de surveillance, et
dans un cas où la première cible de surveillance (1160, 1170, 11160, 11170) et la deuxième cible de surveillance essaient de communiquer l'une avec l'autre, le restricteur de fonction (1163) est configuré pour interdire à la première cible de surveillance (1160, 1170, 11160, 11170) et à la deuxième cible de surveillance de communiquer l'une avec l'autre lorsqu'au moins l'une de la première fiabilité ou de la deuxième fiabilité est inférieure à la valeur seuil.

12. Système de surveillance (1000, 2000) selon l'une quelconque des revendications 4 à 7,
dans lequel la restriction d'au moins la partie des fonctions selon la première fiabilité de la première cible de surveillance (1160, 1170, 11160, 11170) inclut la suspension d'un fonctionnement de la première cible de surveillance (1160, 1170, 11160, 11170).

13. Système de surveillance (1000, 2000) selon la revendication 7,
dans lequel le gestionnaire de fiabilité (23, 1186, 11165) et le restricteur de fonction (1163) sont montés dans le véhicule (10, 20).

14. Système de surveillance (1000, 2000) selon la revendication 7,
dans lequel le système de surveillance (1000, 2000) inclut un serveur (20) qui est connecté de manière communicative au véhicule (10, 20), et
au moins l'un du gestionnaire de fiabilité (23, 1186, 11165) ou du restricteur de fonction (1163) est mis en œuvre dans le serveur (20).

15. Système de surveillance (1000, 2000) selon l'une quelconque des revendications 1 à 7, comprenant en outre :
une unité d'affichage (1013) qui affiche la première cible de surveillance (1160, 1170, 11160, 11170) et la première fiabilité ensemble.

16. Procédé de surveillance d'une unité de commande électronique intégrée (ECU) dans lequel des fonctions d'une pluralité d'ECU sont intégrées et qui fonctionne à l'intérieur d'un véhicule, l'ECU intégrée étant capable de faire fonctionner une pluralité de machines virtuelles, chacune de la pluralité de machines virtuelles incluant une fonction d'au moins une ECU parmi les fonctions de la pluralité d'ECU,
dans lequel le procédé de surveillance comprend la gestion de la fiabilité qui traite l'une de la pluralité de machines virtuelles en tant que cible de surveillance (1160, 1170, 11160, 11170) pour surveiller les fonctions de la pluralité d'ECU, et la gestion de la fiabilité indiquant un état de protection de la sécurité de la cible de surveillance (1160, 1170, 11160, 11170), la fiabilité étant une variable capable de prendre au moins deux niveaux dont chacun indique un degré de l'état de protection de la sécurité de la cible de surveillance (1160, 1170, 11160, 11170), et
le procédé de surveillance comprend :
vérifier l'intégrité du logiciel de la cible de surveillance (1160, 1170, 11160, 11170) ;
effectuer au moins l'une des opérations suivantes : modifier un niveau actuel parmi les au moins deux niveaux pour augmenter le degré de l'état de protection de la sécurité indiqué par la fiabilité lorsque le contrôle d'intégrité a été effectué avec succès ; ou modifier le niveau actuel parmi les au moins deux niveaux pour diminuer le degré de l'état de protection de la sécurité indiqué par la fiabilité lorsque le contrôle d'intégrité n'a pas été effectué avec succès ; et
modifier le niveau actuel parmi les deux niveaux au moins pour diminuer le degré de l'état de protection de la sécurité indiqué par la fiabilité après un délai prédéterminé à partir du moment où le contrôle d'intégrité a été effectué.

17. Dispositif de surveillance pour surveiller une unité de commande électronique intégrée (ECU) dans lequel des fonctions d'une pluralité d'ECU sont intégrées et qui fonctionne à l'intérieur d'un véhicule, l'ECU intégrée étant capable de faire fonctionner une pluralité de machines virtuelles, chacune de la pluralité de machines virtuelles incluant une fonction d'au moins une ECU parmi les fonctions de la pluralité d'ECU,
dans lequel le dispositif de surveillance comprend un gestionnaire de fiabilité configuré pour gérer l'une de la pluralité de machines virtuelles en tant que cible de surveillance (1160, 1170, 11160, 11170) pour surveiller les fonctions de la pluralité d'ECU, et pour gérer la fiabilité indiquant un état de protection de la sécurité de la cible de surveillance (1160, 1170, 11160, 11170), la fiabilité étant une variable capable de prendre au moins deux niveaux dont chacun indique un degré de l'état de protection de la sécurité de la cible de surveillance (1160, 1170, 11160, 11170), et
le dispositif de surveillance :
configuré pour effectuer un contrôle d'intégrité du logiciel de la cible de surveillance (1160, 1170, 11160, 11170) ;
pour effectuer au moins l'une des opérations suivantes : modifier un niveau actuel parmi les au moins deux niveaux pour augmenter le degré de l'état de protection de la sécurité indiqué par la fiabilité lorsque le contrôle d'intégrité a été effectué avec succès ; ou modifier le niveau actuel parmi les au moins deux niveaux pour diminuer le degré de l'état de protection de la sécurité indiqué par la fiabilité lorsque le contrôle d'intégrité n'a pas été effectué avec succès ; et
pour modifier le niveau actuel parmi les deux niveaux au moins pour diminuer le degré de l'état de protection de la sécurité indiqué par la fiabilité après un délai prédéterminé à partir du moment où le contrôle d'intégrité a été effectué.
